# EUROPÄISCHE PATENTSCHRIFT

(11) **EP 3 977 063 B1**
(45) Veröffentlichungstag und Bekanntmachung des Hinweises auf die Patenterteilung: **18.10.2023**
(21) Anmeldenummer: 20719187.5
(22) Anmeldetag: 15.04.2020
(51) Int. Cl.: G01F 1/84, G01N 9/00, G01N 11/16

(54) **MESSWANDLER VOM VIBRATIONSTYP SOWIE DAMIT GEBILDETES VIBRONISCHES MESSSYSTEM**
VIBRATION-TYPE MEASURING TRANSDUCER AND VIBRONIC MEASURING SYSTEM FORMED THEREWITH
TRANSDUCTEUR DE TYPE À VIBRATION ET SYSTÈME DE MESURE VIBRONIQUE LE COMPRENANT

(30) Priorität: 28.05.2019 DE 102019114330
(43) Veröffentlichungstag der Anmeldung: 06.04.2022
(73) Patentinhaber: Endress + Hauser Flowtec AG, 4153 Reinach (CH)
(72) Erfinder: ZHU, Hao, 85354 Freising (DE); ECKERT, Gerhard, 79639 Grenzach-Wyhlen (DE); BITTO, Ennio, 4147 Aesch (CH); RIEDER, Alfred, 84032 Landshut (DE); WERNER, Marc, 79639 Grenzach-Wyhlen (DE)
(74) Vertreter: Andres, Angelika Maria
(86) Internationale Anmeldenummer: PCT/EP2020/060589
(87) Internationale Veröffentlichungsnummer: WO 2020/239319

(56) Entgegenhaltungen:
- WO-A1-2016/091478
- CN-A- 107 290 015
- DE-A1-102015 104 931
- US-A1- 2011 167 907
- US-A1- 2012 279 317

## Beschreibung

Die Erfindung betrifft einen, insb. für ein dem Messen wenigstens einer Meßgröße eines strömenden
Fluids dienliches vibronisches Meßsystem geeigneten, Meßwandler mit einer mittels vier lediglich paarweise baugleichen gekrümmten Rohren sowie zwei jeweils vier Strömungsöffnungen aufweisenden Strömungsteilern gebildeten Rohranordnung sowie ein mittels eines solchen Meßwandlers gebildetes vibronisches Meßsystem zum Messen wenigstens einer Meßgröße, beispielsweise nämlich eines Strömungsparameters, wie einem Massenstrom oder einer Volumenstrom, oder eines Stoffparameters, wie einer Dichte oder einer Viskosität, eines strömenden Fluids. Zudem betrifft die Erfindung ein mit einem solchen Meßwandler gebildetes vibronisches Meßsystem. Zudem betrifft die Erfindung die Verwendung eines solchen Meßwandlers.

In der industriellen Meßtechnik werden - insb. auch im Zusammenhang mit der Regelung und Überwachung von automatisierten verfahrenstechnischen Prozessen - zur hochgenauen Ermittlung einer Massendurchflußrate eines in einer Prozeßleitung, beispielsweise einer Rohrleitung, strömenden Mediums, beispielsweise einer Flüssigkeiten, eines Gases oder einer Dispersion, oftmals jeweils mittels einer - zumeist mittels wenigstens eines Mikroprozessors gebildeten - Umformerschaltung sowie einem mit nämlicher Umformerschaltung elektrisch verbundenen, im Betrieb vom zu messenden Medium durchströmten Meßwandler vom Vibrationstyp gebildete vibronische Meßsysteme, beispielsweise nämlich Coriolis-Massendurchfluß-Meßgeräte, verwendet. Meßwandler vom Vibrationstyp bzw. damit gebildete vibronische Meßsysteme sind beispielsweise in der US-A 2012/0192658, der US-A 2017/0261474, der US-A 2017/0356777 oder der eigenen nicht vorveröffentlichten internationalen Patentanmeldung PCT/EP2018/081298 beschrieben. Die Rohranordnung eines solchen Meßwandlers weist demnach ein gekrümmtes erstes Rohr, ein nämlichem ersten Rohr baugleiches zweites Rohr, ein gekrümmtes drittes Rohr sowie ein lediglich nämlichem dritten Rohr baugleiches viertes Rohr auf. Darüberhinaus weist die vorbezeichnete Rohranordnung einen - beispielsweise im Betrieb als Leitungsverzweigung dienlichen - ersten Strömungsteiler mit - hier genau - vier Strömungsöffnungen und einen dazu baugleichen - beispielsweise im Betrieb als Leitungsvereinigung dienlichen - zweiten Strömungsteiler mit - hier ebenfalls genau - vier Strömungsöffnungen auf. Ein jedes der vorbezeichneten - hier genau - vier Rohre erstreckt sich jeweils von einem jeweiligen ersten Ende bis zu einem jeweiligen zweiten Ende mit einer jeweiligen - einer gestreckten Länge bzw. einer Länge von dessen jeweiliger Mittellinie entsprechenden - Rohrlänge und weist zudem jeweils ein von einer - typischerweise metallischen - Rohrwandung umschlossenes, sich jeweils vom jeweiligen ersten Ende des jeweiligen Rohrs bis zum jeweiligen zweiten Ende nämlichen Rohrs erstreckenden Lumen auf, wobei die Rohrwandung typischerweise monolithisch, mithin das damit gebildete Rohr typischerweise einstückig ausgebildet ist. Zudem weisen die zu einer der vorbezeichneten Rohranordnung gehörigen vier Rohre jeweils ein gleiches Kaliber (Innendurchmesser) auf und ist ein jedes der Rohre zwecks Bildung vier paralleler Strömungspfade jeweils an jeden der beiden Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Die Rohre der Rohranordnung sind typsicherweise jeweils, beispielsweise durch Biegen, so geformt, daß jedes der ersten, zweiten, dritten und vierten Rohre im Ergebnis jeweils eine in einer (Biege-) Ebene liegende Rohrform aufweist und die Rohrwandung jedes der Rohre besteht typischerweise aus dem gleichen Material, wie z.B. einem Edelstahl oder einer Nickelbasislegierung.

Jedes der Rohre weist zudem jeweils eine erste gedachte Symmetrieebene sowie eine dazu senkrechte zweite gedachte Symmetrieebene auf und ist jedes der Rohre so geformt, daß es jeweils sowohl zur zugehörigen ersten Symmetrieebene als auch zur zugehörigen zweiten Symmetrieebene spiegelsymmetrisch ist, beispielsweise derart, daß im Ergebnis jedes der vorbezeichneten Rohre zumindest teilweise im wesentlichen V-förmig ausgebildete ist bzw. zumindest Teilbereiche mit einer im wesentlichen V-förmigen Silhouette aufweist. Darüberhinaus sind die Rohre und Strömungsteiler, wie bei Rohranordnungen der vorgenannten Art durchaus üblich, so ausgestaltet und angeordnet, daß die jeweilige Rohranordnung im Ergebnis eine sowohl zwischen dem ersten und zweiten Rohr als auch zwischen dem dritten und vierten Rohr verortete erste gedachte Symmetrieebene aufweist, bezüglich der die Rohranordnung spiegelsymmetrisch ist, und daß die Rohranordnung eine zu nämlicher ersten gedachten Symmetrieebene senkrechte, gleichwohl jedes Rohre imaginär schneidende zweite gedachte Symmetrieebene aufweist, bezüglich der die Rohranordnung ebenfalls spiegelsymmetrisch ist. Zudem sind die Rohre so angeordnet, daß das erste Rohr zur ersten gedachten Symmetrieebene einen kleinsten Abstand aufweist, der gleich einem kleinsten Abstand ist, den das dritte Rohr zur ersten gedachten Symmetrieebene aufweist und daß das dritte Rohr zur ersten gedachten Symmetrieebene einen kleinsten Abstand aufweist, der gleich einem kleinsten Abstand ist, den das vierte Rohr zur ersten gedachten Symmetrieebene aufweist; dies im besonderen auch in der Weise, daß die ersten und zweiten Rohre zueinander bzw. zur ersten gedachten Symmetrieebene parallel sind und daß die dritten und vierten Rohre zueinander bzw. zur ersten gedachten Symmetrieebene parallel sind, beispielsweise auch derart, daß das erste Rohr und das dritte Rohr in einer gemeinsamen ersten Rohrebene liegen und daß das zweite Rohre und das vierte Rohre in einer gemeinsamen zweiten Rohrebene liegen.

Typischerweise weisen Meßwandler der in Rede, wie auch in der US-A 2012/0192658, der US-A 2017/0261474, der US-A 2017/0356777 oder der internationalen Patentanmeldung PCT/EP2018/081298 jeweils offenbart, desweiteren ein dessen jeweilige Rohre umhüllendes Wandlergehäuse mit einer zumeist hermetisch geschlossenen Kavität, innerhalb der jedes Rohre angeordnet ist, auf. Jedes der Wandlergehäuse ist mittels eines zylindrischen, insb. nämlich röhrenförmigen bzw. zumindest abschnittsweise hohlzylindrischen, Tragelement sowie eines - beispielsweise kappenförmiges - Hüllelement gebildet. Das Tragelement erstreckt sich von einem ersten Ende bis zu einem zweiten Ende mit einer Tragelementlänge und ist an dessen ersten Ende mit dem ersten Strömungsteiler und mit an dessen zweiten Ende mit dem zweiten Strömungsteiler mechanisch, insb. stoffschlüssig, verbunden. Das Hüllelement wiederum ist mit dem Tragelement mechanisch, insb. stoffschlüssig, verbunden. Sowohl das Tragelement als auch das Hüllelement weisen jeweils einen von einer, typischerweise metallischen, Wandung umhüllten, jeweils einen Teilbereich der Kavität bildenden Hohlraum auf, derart, daß eine Wandung des Hüllelements zusammen mit einem Segment der Wandung des Trägerelements einen einen Teilbereich der Kavität bildenden Hohlraum umhüllen und daß nämliche Hohlräume miteinander kommunizieren bzw. ineinander übergehen. Dafür sind in der Wandung des Tragelements jeweils eine erste Öffnung sowie wenigstens eine von der ersten Öffnung entlang einer gedachten Mantellinie der Wandung beabstandete zweite Öffnung vorgesehen, derart, daß jede der ersten und zweiten Öffnungen jeweils einen Teilbereich der Kavität des Wandlergehäuses bildet und daß sich jedes der Rohre jeweils sowohl durch die erste Öffnung als auch durch die zweite Öffnung erstreckt. Die Rohranordnung und das Wandlergehäuse sind bei den vorbezeichneten Meßwandlern zudem jeweils so ausgebildet und positioniert, daß jedes der Rohre lediglich teilweise innerhalb des Hohlraums des Tragelements, mithin lediglich teilweise innerhalb des Hohlraums des Hüllelements angeordnet ist.

Die Rohranordnung bzw. der damit gebildete Meßwandler ist im besonderen dafür vorgesehen bzw. eingerichtet, in den Verlauf einer ein zu messendes Fluid - beispielsweise nämlich ein Gas, eine Flüssigkeit oder eine Dispersion - führenden als Rohrleitung ausgebildeten Prozeßleitung eingegliedert und im Betrieb von nämlichem Fluid durchströmt zu werden. Der Meßwandler kann dafür beispielsweise so in die Prozeßleitung eingegliedert sein, daß der erste Strömungsteiler der Rohranordnung einlaßseitig angeordnet ist, mithin als eine Leitungsverzweigung dient, und daß der zweite Strömungsteiler der Rohranordnung auslaßseitig angeordnete ist, mithin als eine Leitungsvereinigung dient und daß jedes der Rohre der Rohranordnung in einer gemeinsamen Strömungsrichtung, nämlich ausgehend von dessen jeweiligen ersten Ende in Richtung von dessen jeweiligen zweiten Ende von Fluid durchströmt wird. Darüberhinaus ist jedes der vorbezeichneten Rohre jeweils dafür eingerichtet, in dessen jeweiligen Lumen das ggf. strömende Fluid zu führen und währenddessen, nicht zuletzt zwecks Bewirken von mit der wenigstens einen Meßgröße korrelierten Meßeffekten, um vibrieren gelassen zu werden, insb. derart, daß jedes der Rohre Nutzschwingungen, nämlich mechanische Schwingungen um eine jeweilige Ruhelage mit einer auch von der Dichte des Mediums mitbestimmten, mithin als Maß für die Dichte verwendbaren Nutzfrequenz ausführt. Bei herkömmlichen als Coriolis-Massendurchfluß-Meßgeräte ausgebildeten Meßsystemen dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen jedes der Meßrohre jeweils solche Resonanzschwingungen sind, die genau einen Schwingungsbauch aufweisen. Die Nutzschwingungen sind bei einem zumindest abschnittsweise gekrümmtem Rohr zudem typischerweise so ausgebildet, daß nämliches Rohr um eine zugehörige, ein einlaßseitiges und ein außlaßseitiges Ende des Rohrs imaginär verbindenden gedachte Schwingungsachse nach Art eines an einem Ende eingespannten Auslegers pendelt. Zwecks der Vermeidung von für die Messung schädlichen Kontakten der vibrierenden Rohre untereinander oder mit dem des Wandlergehäuse weist jedes der Rohre lediglich solche Abstände zu den jeweils anderen Rohren wie auch zum Wandlergehäuse, nicht zuletzt auch zu einem jeweiligen Rand jeder der beiden in der Wandung des Tragelements vorgesehenen Öffnungen, auf, die jeweils unter allen Betriebsbedingungen freie Schwingungen mit für die Messung ausreichender Schwingungsamplitude ermöglichen.

Zum Anregen und Aufrechterhalten von erzwungen mechanischen Schwingungen der Rohranordnung, insb. nämlich auch der vorbezeichneten Nutzschwingungen, weist der Meßwandler eine entsprechende, mittels zwei baugleichen elektro-dynamischen Schwingungserregern gebildete Erregeranordnung auf. Jeder der jeweils mittels eines Paars elektrischer Anschlußleitungen, beispielsweise inform von Anschlußdrähten und/oder inform von Leiterbahnen einer flexiblen Leiterplatte, mit der vorbezeichneten Umformerschaltung elektrisch verbundene Schwingungserreger dient im besonderen dazu, angesteuert von einem jeweiligen in der Umformerschaltung vorgesehenen Antriebselektronik generierten und entsprechend konditionierten, nämlich jeweils zumindest an sich verändernde Schwingungseigenschaften der jeweiligen Rohre angepaßten elektrischen Treibersignal eine damit eingespeiste elektrische Erregerleistung in auf die jeweiligen Rohre wirkende Antriebskräfte zu wandeln. Die Antriebselektronik ist im besonderen auch dafür eingerichtet, jedes der Treibersignale mittels interner Regelung so einzustellen, daß es jeweils eine der jeweils anzuregenden, gelegentlich auch zeitlich ändernden Nutzfrequenz entsprechende Signalfrequenz aufweist. Aufgrund der vorbezeichneten Nutzschwingungen werden - nicht zuletzt auch für den Fall, daß die Nutzschwingungen Biegeschwingungen sind - im strömenden Medium bekanntlich auch von der momentanen Massendurchflußrate abhängige Corioliskräfte induziert. Diese wiederum können von der Massendurchflußrate abhängige, sich den Nutzschwingungen jeweils überlagernde Coriolisschwingungen mit Nutzfrequenz bewirken, derart, daß zwischen einlaßseitigen und auslaßseitigen Schwingungsbewegungen jedes der die Nutzschwingungen ausführenden und zugleich von Fluid durchströmten Rohre eine auch von der Massedurchflußrate abhängige, mithin auch als Maß für die Massendurchflußmessung nutzbare Laufzeit- bzw. Phasendifferenz detektiert werden kann. Bei einem zumindest abschnittsweise gekrümmten Rohr, bei denen für die Nutzschwingungen eine Schwingungsform, in der nämliches Rohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Rohr jeweils Drehschwingungen um eine zugehörige senkrecht zur erwähnten gedachten Schwingungsachse ausgerichtete gedachte Drehschwingungsachse ausführt. Ferner weist der Meßwandler eine dem Erfassen von mechanischen Schwingungen der Rohranordnung, insb. nämlich den vorbezeichneten Biegeschwingungen der Rohre, sowie dem Erzeugen von jeweils Schwingungsbewegungen eines oder mehrerer der Rohre repräsentierenden Meßsignalen dienliche, mittels vier baugleicher elektrodynamischen Schwingungssensoren gebildete Sensoranordnung auf.

Die Rohre vorbezeichneter Rohranordnungen bzw. eines damit jeweils gebildeten Meßwandlers weisen jeweils wenigstens ein mit dem ersten Strömungsteiler der Rohranordnung verbundenes, mithin das erste Ende des Rohrs bildendes gerades erstes Teilsegment, ein an nämliches erstes Teilsegment anschließendes bogenförmiges zweites Teilsegment, ein an nämliches zweites Teilsegment anschließendes gerades drittes Teilsegment, ein an nämliches drittes Teilsegment anschließendes bogenförmiges viertes Teilsegment, ein an nämliches viertes Teilsegment anschließendes gerades fünftes Teilsegment, ein an nämliches fünftes Teilsegment anschließendes bogenförmiges sechstes Teilsegment sowie ein sowohl an nämliches sechstes Teilsegment anschließendes als auch mit dem zweiten Strömungsteiler der Rohranordnung verbundenes, mithin das zweite Ende des Rohrs bildendes gerades siebentes Teilsegment auf. Die ersten wie auch die siebenten Teilsegmente können beispielsweise durch Löten oder Schweißen stoffschlüssig bzw. durch Pressen und/oder Einwalzen kraft- und/oder formschlüssig mit dem jeweiligen Strömungsteiler verbunden sein.

Sowohl jedes der ersten und siebenten Teilsegmente als auch jedes der zweiten und sechsten Teilsegmente wie auch der dritten und fünften Teilsegmente des jeweiligen Rohrs bilden jeweils Paar einander baugleicher Teilsegmente. Zudem sind alle geraden Teilsegmente jeweils hohlzylindrisch, wobei die ersten Teilsegmente sowohl form- als auch größengleich sind und wobei die siebten Teilsegment zueinander wie auch zu den ersten Teilsegmenten sowohl form- als auch größengleich sind, derart, daß von jedem der ersten und siebten Teilsegmente der ersten und zweiten Rohre dessen Segmentlänge jeweils gleich groß ist wie die Segmentlänge jedes der anderen der ersten und siebten Teilsegmente der ersten und zweiten Rohre. Die Rohre sind ferner so ausgebildet und angeordnet, daß die ersten Teilsegmente jeweils zueinander parallel verlaufen, daß die dritten Teilsegmente jeweils zueinander parallel verlaufen, daß die fünften Teilsegmente jeweils zueinander parallel verlaufen und daß die siebten Teilsegmente jeweils zueinander parallel verlaufen.

Desweiteren sind die bogenförmigen zweiten, vierten und sechsten Teilsegmente jeweils kreisbogenförmig ausgebildet, derart, daß jedes der bogenförmigen Teilsegmente jeweils eine einer gestreckten Länge einer gedachten kreisbogenförmigen Mittellinie nämlichen Teilsegments entsprechende Segmentlänge (Bogenlänge), einen einem Radius nämlicher gedachten kreisbogenförmigen Mittellinie entsprechenden Bogenradius und einen einem Verhältnis nämlicher Segementlänge zu nämlichem Bogenradius entsprechenden Mittelpunktswinkel aufweist. Zudem sind die Rohre ferner so ausgebildet und angeordnet, daß zumindest die zweiten Teilsegmente der ersten und zweiten Rohre in Projektion auf die erste Symmetrieebene parallel zu den zweiten Teilsegmenten der dritten und vierten Rohre und zumindest die sechsten Teilsegmente der ersten und zweiten Rohre in Projektion auf die erste Symmetrieebene parallel zu den sechsten Teilsegmenten der dritten und vierten Rohre verlaufen.

Bei in der US-A 2012/0192658 bzw. US-A 2017/0261474 gezeigten Meßwandlern weisen die zu einem ersten Paar baugleicher Rohre gehörigen zwei Rohre im besonderen jeweils auch die gleiche Rohrlänge auf wie die zum jeweils anderen zweiten Paar baugleicher Rohre gehörigen anderen zwei Rohre. Dafür sind die Rohre ferner so ausgebildet und angeordnet, daß auch die vierten Teilsegmente der ersten und zweiten Rohre in Projektion auf die erste Symmetrieebene parallel zu den vierten Teilsegmenten der dritten und vierten Rohre verlaufen. Zudem sind die in der vorbezeichneten gemeinsamen ersten Rohrebene liegenden erste und dritten Rohre wie auch die in der gemeinsamen zweiten Rohrebene liegenden zweite und vierten Rohre jeweils mittels Knotenplatten miteinander starr gekoppelt. Im Unterschied dazu weisen bei in der US-A 2017/0356777 gezeigten Meßwandlern die zu einem ersten Paar baugleicher Rohre gehörigen zwei Rohre jeweils eine andere Rohrlänge auf als die zum jeweils anderen, zweiten Paar baugleicher Rohre gehörigen anderen zwei Rohre, derart, daß die ersten und zweiten Rohre jeweils eine größere Rohrlänge aufweisen als die dritten und vierten Rohre, wobei dafür die Segmentlänge jedes der geraden dritten und fünften Teilsegmente der ersten und zweiten Rohre jeweils größer ist als die Segmentlänge jedes der geraden dritten und fünften Teilsegmente der dritten und vierten Rohre. Im Ergebnis dessen ist eine solche Rohranordnung mittels solcher vier Rohre gebildet, denen lediglich paarweise gleiche Eigen- bzw. Resonanzfrequenzen innewohnen, mithin können intrinsisch, nämlich auch bereits ohne paarweise baugleiche Rohre koppelende zusätzliche Knotenplatten, zwei mechanische Oszillatoren - hier nämlich das erste bzw. zweite Paar baugleicher Rohre - mit voneinander signifikant abweichenden, nämlich zumindest in einem Biegeschwingungsgrundmode voneinander abweichende Eigen- bzw. Resonanzfrequenzen aufweisenden Frequenzspektren bereitgestellt werden.

Wie u.a. auch in der US-A 2012/0192658 oder der US-A 2017/0261474 erörtert, kann eine mittels solcher Meßwandler gebildeten Meßsystems zu erreichende Meßgenauigkeit u.a. auch von den einzelnen Strömungswiderständen der mittels der Rohre gebildeten vier Strömungspfade der Rohranordnung bzw. einem Ausmaß, mit dem einer der Strömungswiderstände jeweils von jedem der anderen Strömungswiderstände abweicht, abhängig sein. Beispielsweise wird in der US-A 2012/0192658 vorgeschlagen die Rohre der Rohranordnung so auszubilden, daß dadurch vier parallele Strömungspfade mit jeweils identischen Strömungswiderständen bereitgestellt sind, wohingegen in der US-A 2017/0356777 oder in der DE 10 2015 104931 A1 vorgeschlagen wird, die vier Rohre, mithin die dadurch bereitgestellten vier parallelen Strömungspfade mit voneinander abweichenden Strömungswiderständen auszubilden, derart, daß zwar zwei baugleich Rohre naturgemäß jeweils denselben Strömungswiderstand bewirken, daß aber jener der beiden vorbezeichneten Oszillatoren, der im zugehörigen Biegeschwingungsgrundmode die im Vergleich zum anderen der beiden Oszillatoren höhere Eigenfrequenz aufweist, insgesamt dem strömenden Fluid Teil-Strömungswiderstand entgegenwirkt, der im Vergleich zu einem Teil-Strömungswiderstand des anderen der beiden Oszillatoren kleiner ist.

Weiterführende Untersuchungen an Meßwandlern der in Rede stehenden Art haben zudem ergeben, daß bei mittels lediglich paarweise baugleichen Rohren gebildeten Meßwandlern - beispielsweise gemäß der US-A 2017/0356777 oder der US-A 2012/0192658 - nicht nur die vorbezeichneten Strömungswiderstände an sich sondern zudem auch eine Abweichung zwischen dem durch das erste Paar baugleicher Rohre insgesamt gebildeten ersten Teil-Strömungswiderstand und dem durch das zweite Paar baugleicher Rohre insgesamt gebildeten zweiten Teil-Strömungswiderstand in erheblichem Maße vom strömenden Fluid selbst beeinflußt, insb. nämlich von einer Reynoldszahl (Re) des in der Prozeßleitung strömenden Fluids abhängig sein können; dies im besonderen in der Weise, daß der vorbezeichnete erste Teil-Strömungswiderstand auch bei einer einphasigen Flüssigkeit mit zunehmender Reynoldszahl erheblich vom vorbezeichneten zweiten Teil-Strömungswiderstand abweichen kann und damit einhergehend auch ein durch das erste Paar baugleicher Rohre etablierter erster Teil-Massenstrom von einem durch das zweite Paar baugleicher Rohre etablierten zweiten Teil-Massenstrom gleichermaßen abweichen kann, wobei nämliche relative Abweichung der beiden Teil-Strömungswiderstände bzw. der beiden Teil-Massenströme im Betrieb des jeweiligen Meßsystems zudem erheblichen Schwankungen unterliegen kann.

Ausgehend vom vorbezeichneten Stand der Technik besteht eine Aufgabe der Erfindung darin, Rohrandordnungen der in Rede stehenden Art bzw. damit gebildete Meßwandler dahingehend zu verbessern, daß eine Abweichung (Δm) zwischen den vorbezeichneten Teil-Strömungswiderstände der mittels der lediglich paarweise baugleichen Rohre gebildeten Strömungspfade bzw. eine dadurch provozierte Abweichung zwischen den ersten und zweiten Teil-Massenströmen zum einen möglichst gering und zum anderen weitgehend unabhängig von der Reynoldszahl des in der Rohrleitung strömenden Fluids ist, derart, daß für ein mit einer zwischen 2000 und 100000 liegenden Reynoldszahl (Re = 2000 ... 100000) in der Prozeßleitung strömendes Fluid und/oder für einen mit einer Schwankungsbreite (ΔRe) von mehr als 20000 (ΔRe = 20000) ändernden Reynoldszahl Massenstrom in der Prozeßleitung eine jeweilige Abweichung zwischen dem ersten Teil-Massenstrom und dem zweiten Teil-Massenstrom nicht mehr als 2% des jeweils größten der beiden Teil-Massenströme beträgt. Zudem sollen die vorbezeichneten Abweichungen (Δm) zwischen dem ersten Teil-Massenstrom und dem zweiten Teil-Massenstrom zumindest innerhalb der vorbezeichneten, nämlich zwischen 2000 und 100000 liegenden und/oder sich über mehr als 20000 erstreckenden Reynoldszahl-Bereiche (ΔRe) höchstens eine Schwankungsbreite von insgesamt weniger als 1% des größten der beiden Teil-Massenströme und/oder von weniger als 50% einer maximalen Abweichung zwischen beiden Teil-Massenströmen aufweisen; dies insb. auch bei nach wie vor möglichst kompakter Bauweise des Meßwandlers.

Zur Lösung der Aufgabe besteht die Erfindung in einem Meßwandler für ein dem Messen wenigstens einer Meßgröße eines strömenden Fluids dienlichen vibronisches Meßsystem, welcher Meßwandler gemäß dem Anspruch 1 ausgeführt ist.

Desweiteren besteht die Erfindung auch in einem vibronischen Meßsystem gemäß Anspruch 22

Zudem besteht die Erfindung gemäß Anspruch 23 auch darin den vorbezeichneten Meßwandlers oder das damit gebildete vorbezeichnete zum Messen und/oder Überwachen eines in einer (beispielsweise eine Nennweite von mehr als 100 mm aufweisenden) Rohrleitung strömenden Fluids (beispielsweise auch einer mit einer Massendurchflußrate von mehr als 800 t/h strömenden Flüssigkeit) zu verwenden.

Weitere Ausgestaltungen der Erfindung sind in den Unteransprüchen 2-21 spezifiziert.

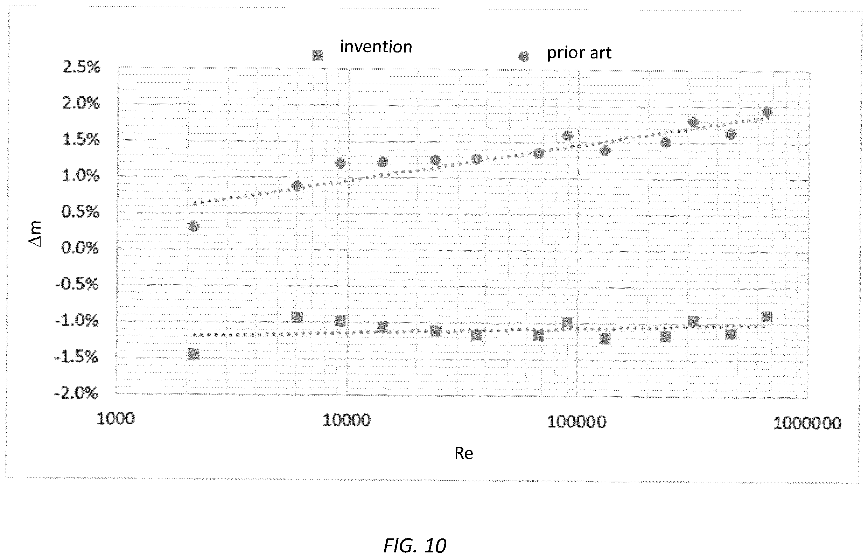

Ein Grundgedanke der Erfindung besteht darin, die - nicht zuletzt auch die Meßgenauigkeit von konventionellen vibronischen Meßsystemen der eingangs genannten Art beeinträchtigende - vorbezeichnete, mit der Abweichung zwischen den ersten und zweiten Teil-Strömungswiderständen einhergehende Abweichung der ersten und zweiten Teil-Massenströmen durch den Meßwandler bzw. deren Abhängigkeit von der Reynoldszahl des in der Rohrleitung strömenden Fluids dadurch zu minimieren, daß sowohl die zweiten Teilsegmente als auch die sechsten Teilsegmente aller vier Rohre sowohl formgleich als auch größengleich sind, wodurch die in eingangsseitig bzw. ausgangsseitig jeweils in den Teil-Massenströmen wirkenden Radial- bzw. Zentrifugalbeschleunigungen im wesentlichen gleich sind. Damit einhergehend können auch die Strömungsprofile der Teil-Massenströme gleichmäßiger ausgebildet werden als dies bei konventionellen Rohranordnungen mit vier gebogenen Rohren bzw. damit gebildeten vibronischen Meßwandlern bislang der Fall war (vgl. Fig 10).

Ein Vorteil der Erfindung besteht ferner auch darin, daß die vorbezeichneten zweiten und sechsten Teilsegmente, mithin acht von insgesamt zwölf kreisbogenförmigen Teilsegmenten der vier Rohre baugleich sind, nämlich sowohl gleiche Segmentlängen als auch gleiche Bogenradien und Mittelpunktswinkel aufweisen, wodurch sich die Herstellung der vier Rohre erheblich vereinfacht und im Ergebnis die Herstellungskosten der jeweiligen Rohranordnung entsprechend verringert werden können. Ein weiterer Vorteil ist ferner auch darin zu sehen, daß die Rohranordnung durchaus auch mittels konventioneller Strömungsteiler gebildet werden kann, indem durch die Verwendung der acht baugleichen kreisbogenförmigen Teilsegment zwangsläufig verursachte geringfügige Abweichungen der Abstände nämlicher kreisbogenförmiger Teilsegmente zu dem jeweils nächsten ersten bzw. zweiten Strömungsteiler durch entsprechend angepaßte Segmentlängen der an die kreisbogenförmigen zweiten Teilsegmente anschließenden geraden ersten Teilsegmente bzw. der an die kreisbogenförmigen sechsten Teilsegmente anschließenden geraden siebten Teilsegmente ausgeglichen werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im Einzelnen zeigen:
- Fig. 1, 2A, 2B: in verschiedenen, teilweise auch geschnittenen und/oder auch perspektivischen, Seitenansichten ein vibronisches Meßsystem;
- Fig. 3A, 3B: in verschiedenen, teilweise auch geschnittenen und/oder auch perspektivischen, Seitenansichten einen für ein vibronisches Meßsystem gemäß Fig. 1, 2A bzw. 2B geeigneten Meßwandler;
- Fig. 4, 5A, 5B: in verschieden, teilweise auch geschnittenen und/oder auch perspektivischen, Seitenansichten eine weitere Variante eines vibronisches Meßsystems;
- Fig. 6A, 6B: in verschieden, teilweise auch geschnitten und/oder auch perspektivischen, Seitenansichten einen für ein vibronisches Meßsystem gemäß Fig. 4, 5A bzw. 5B geeigneten Meßwandler;
- Fig. 7A, 7B: in zwei Seitenansichten eine Rohranordnung eines Meßwandlers gemäß Fig. 3A, 3B bzw. gemäß Fig. 6A, 6B;
- Fig. 8, 9A, 9B: in drei weiteren Seitenansichten die Rohranordnung gemäß Fig. 7A und 7B; und
- Fig. 10: experimentell, nämlich mit einer erfindungsgemäßen Rohranordnung gemäß Fig. 7A und 7B bzw. einem damit gebildten Meßwandler ("invention") wie auch mit einem herkömmlichen, mittels einer vier gleichlange Rohre aufweisenden Rohranordnung gebildeten Meßwandler ("prior art") ermittelte Meßwerte für (relative) Abweichung zwischen Teil-Massenströmen.

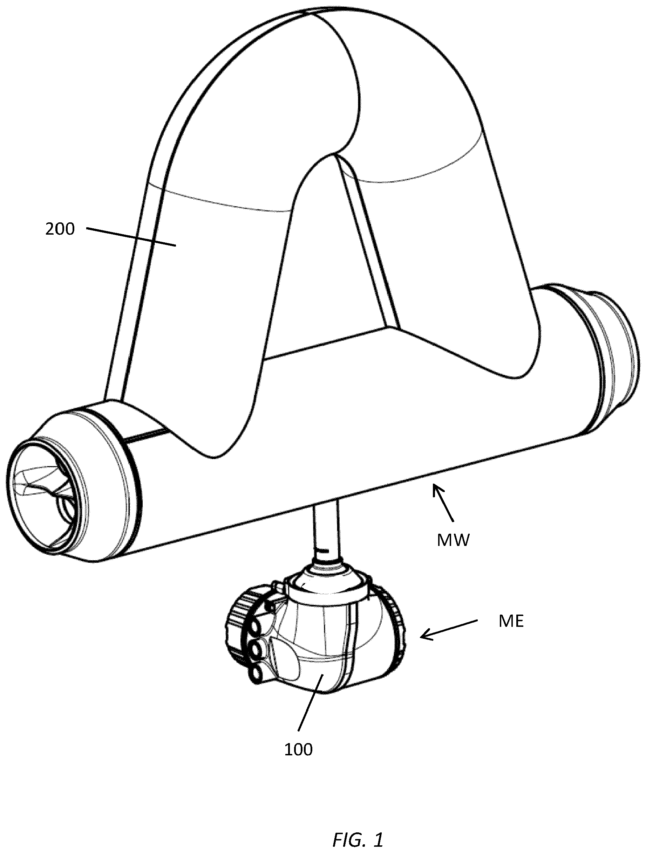

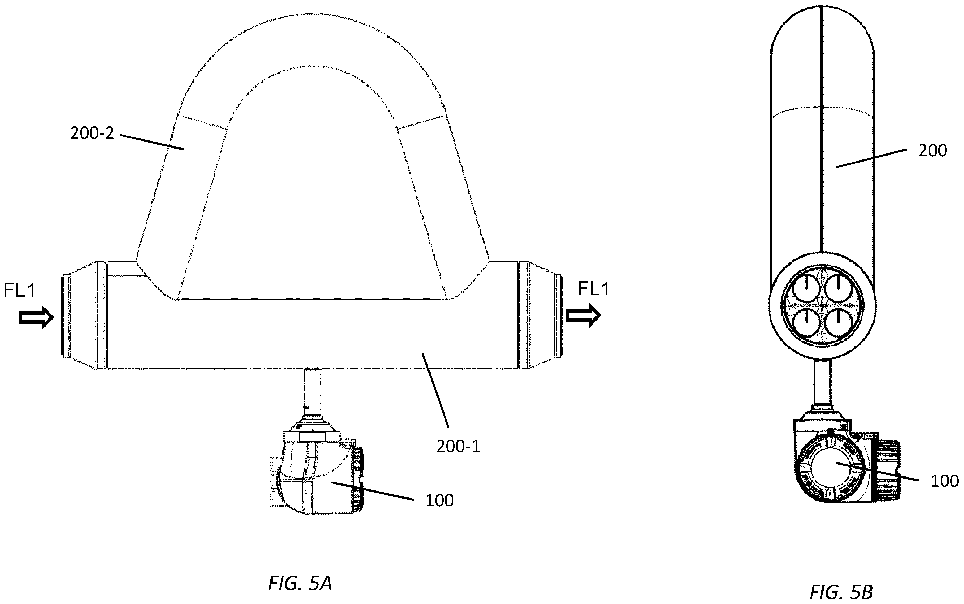

In Fig. 1, 2A und 2B, bzw. 4, 5A und 5B sind Ausführungsbeispiele bzw. Ausgestaltungvarianten eines dem Messen und/oder Überwachen wenigstens eines, beispielsweise zeitlich veränderlichen, Strömungsparameters, beispielsweise einer Massendurchflußrate, einer Volumendurchflußrate und/oder einer Strömungsgeschwindigkeit, und/oder zum Messen und/oder Überwachen wenigstens eines, beispielsweise zeitlich veränderlichen, Stoffparameters, beispielsweise einer Dichte und/oder einer Viskosität, eines zumindest zeitweise strömenden Fluids FL1 dienliches vibronisches Meßsystems schematisch dargestellt. Das Meßsystem ist im besonderen dafür vorgesehen bzw. eingerichtet, in den Verlauf einer das als Meßstoff dienliche Fluid FL1 - beispielsweise nämlich ein Gas, eine Flüssigkeit oder eine Dispersion - führenden und/oder als Rohrleitung ausgebildeten Prozeßleitung eingegliedert und im Betrieb von dem via Prozeßleitung zu- bzw. wieder abgeführten Fluid FL1 zumindest zeitweise durchströmt zu werden.

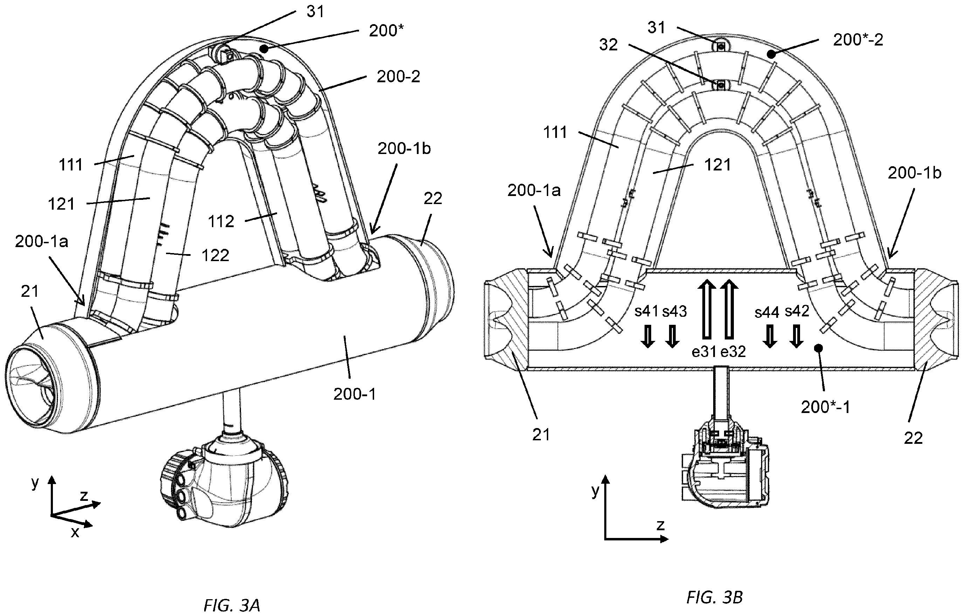

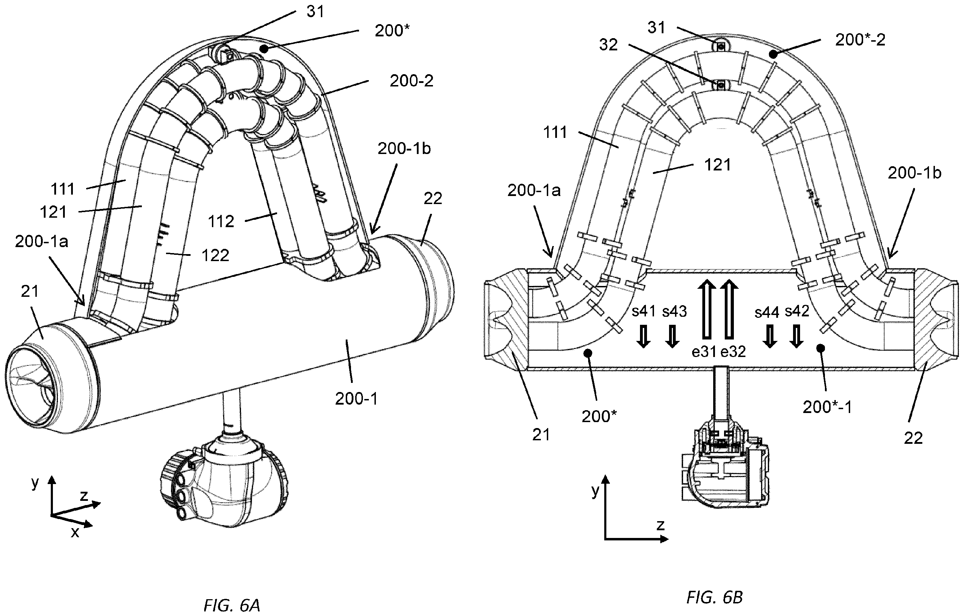

Wie in Fig. 3A, 3B, 6A und 6B dargestellt bzw. aus einer Zusammenschau der Fig. 1, 2A, 2B, 3A und 3B oder 4, 5A, 5B, 6A und 6B ohne weiters ersichtlich, umfaßt das Meßsystem einen Meßwandler MW mit einer mittels vier - beispielsweise zwecks Bereitstellung von parallelen Strömungspfaden mit voneinander abweichendem Strömungswiderständen - lediglich paarweise baugleichen Rohren (111, 121, 112, 122) sowie zwei daran jeweils angeschlossener Strömungsteiler (21, 22) gebildete Rohranordnung, eine Erregeranordnung (31, 32) zum Anregen und Aufrechterhalten von mechanischen Schwingungen der Rohranordnung, nicht zuletzt von deren Rohren, sowie eine Sensoranordnung (41, 42, 43, 44) zum Erfassen von mechanischen Schwingungen der Rohranordnung, beispielsweise nämlich von mechanischen Schwingungen der Rohre. Zudem kann im Meßwandler beispielsweise auch eine dem Erfassen von Temperaturen innerhalb der Rohranordnung dienliche Temperaturmeßanordnung und/oder eine dem Erfassen von mechanischen Spannungen innerhalb der Rohranordnung dienliche Dehnungsmeßanordnung vorgesehen sein.

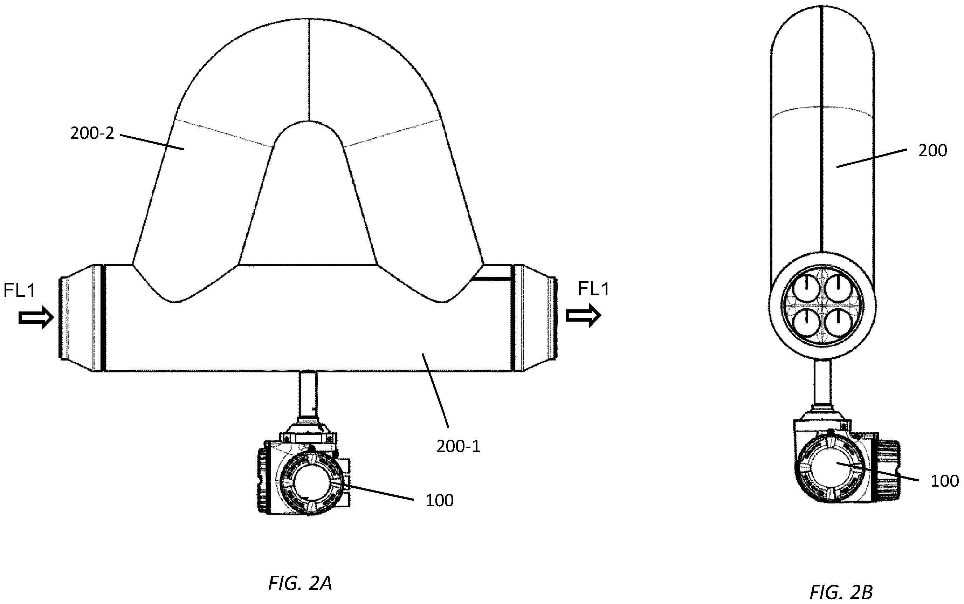

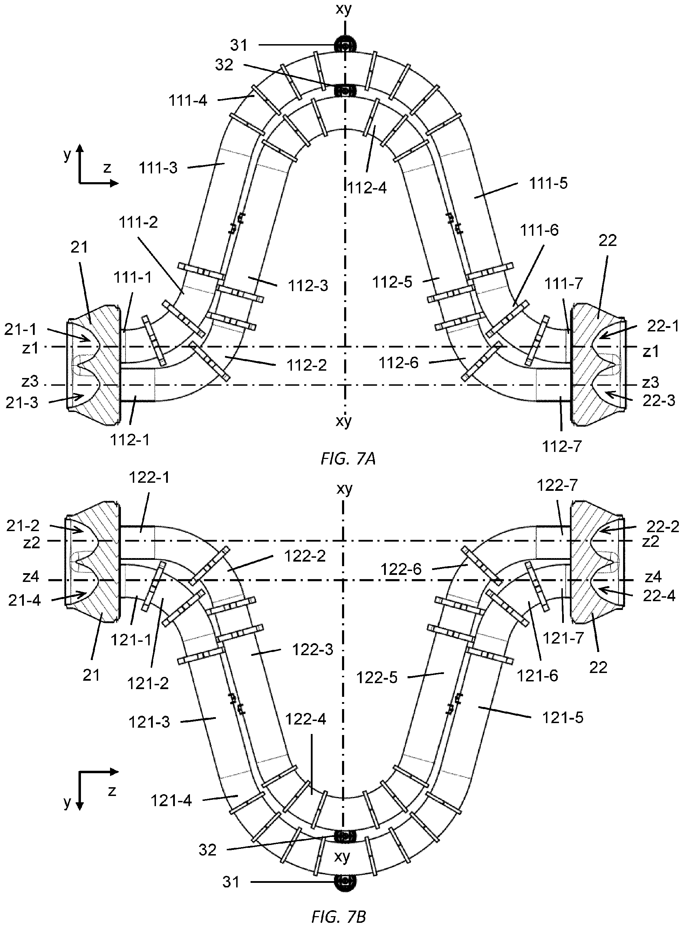

Die Rohranordnung des erfindungsgemäßen Meßwandlers bzw. des damit gebildeten Meßsystems ist nochmals in den Fig. 7A, 7B, 8, 9A, bzw. 9B gezeigt und weist ein gekrümmtes erstes Rohr 111, ein nämlichem Rohr 111 baugleiches gekrümmtes zweites Rohr 121, ein gekrümmtes drittes Rohr 112 sowie ein lediglich nämlichen Rohr 112, mithin weder dem Rohr 111 noch dem Rohr 121 baugleiches viertes Rohr 122 auf. Darüberhinaus weist die Rohranordnung einen ersten Strömungsteiler 21 mit vier Strömungsöffnungen 21-1, 21-2, 21-3, 21-4 und einen, beispielsweise nämlichem Strömungsteiler 21 baugleichen, zweiten Strömungsteiler 22 mit gleichermaßen vier Strömungsöffnungen 22-1, 22-2, 22-3, 22-4 auf. Jedes der Rohre 111, 112, 121, 122 erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer - beispielsweise metallischen - Rohrwandung umschlossenes, sich jeweils vom jeweiligen ersten Ende des jeweiligen Rohrs bis zum jeweiligen zweiten Ende nämlichen Rohrs erstreckenden Lumen auf. Darüberhinaus ist jedes der Rohre 111, 112, 121, 122 - wie auch in Fig. 3A und 3B bzw. 6A und 6B jeweils gezeigt bzw. aus einer Zusammenschau der Fig. 2A, 2B, 3A, 3B, 7A, 7B und 8 bzw. 5A, 5B, 6A, 6B, 7A, 7B und 8 ohne weiteres ersichtlich - jeweils an jeden der beiden Strömungsteiler 21, 22 angeschlossen, beispielsweise nämlich stoff-, kraft- und/oder formschlüssig damit verbunden, derart, daß das Rohr 111 mit dessen ersten Ende in eine erste Strömungsöffnung 21-1 des Strömungsteilers 21 und mit dessen zweiten Ende in eine erste Strömungsöffnung 22-1 des Strömungsteilers 22, das Rohr 121 mit dessen ersten Ende in eine zweite Strömungsöffnung 21-2 des Strömungsteilers 21 und mit dessen zweiten Ende in eine zweite Strömungsöffnung 22-2 des Strömungsteilers 22, das Rohr 112 mit dessen ersten Ende in eine dritte Strömungsöffnung 21-3 des Strömungsteilers 21 und mit dessen zweiten Ende in eine dritte Strömungsöffnung 22-3 des Strömungsteilers 22 und das Rohr 122 mit dessen ersten Ende in eine vierte Strömungsöffnung 21-4 des Strömungsteilers 21 und mit dessen zweiten Ende in eine vierte Strömungsöffnung 22-4 des Strömungsteilers 22 münden. Im Ergebnis sind somit vier strömungstechnisch parallele Strömungspfade gebildet, derart, daß das in den Meßwandler einströmende Fluid auf vier Teilströme bzw. ein in den Meßwandler eingehender Massenstrom entsprechend auf vier Teil-Massenströme aufgeteilt wird und daß nämliche Teilströme beim Ausströmen aus dem Meßwandler wieder zusammengeführt bzw. die Teil-Massenströme zu einem einzigen ausgehenden Massenstrom wieder vereinigt werden. Wie aus der Zusammenschau der Fig. 2A, 2B, 3A, 3B, 7A, 7B und 8 bzw. 5A, 5B, 6A, 6B, 7A, 7B und 8 ersichtlich kann der Strömungsteiler 21 in Strömungsrichtung des Fluids FL1 einlaßseitig angeordnet sein bzw. als Leitungsverzweigung dienen und kann der Strömungsteiler 22 entsprechend in Strömungsrichtung des Fluids FL1 auslaßseitig angeordnet sein bzw. als Leitungsvereinigung dienen. Gemäß einer weiteren Ausgestaltung der Erfindung ist ferner vorgesehen, daß die Rohranordnung genau vier Rohre, mithin außer den vorbezeichneten Rohren 111, 112, 121, 122 kein weiteres an den Strömungsteiler 21 und den Strömungsteiler 22 angeschlossenes Rohr aufweist. Die vorbezeichnete Rohrlänge entspricht hier einer gestreckten Länge bzw. einer Länge einer gedachten Mittellinie des jeweiligen Rohrs, wobei die Rohrlänge des Rohrs 111 gleich der Rohrlänge des Rohrs 121 bzw. die Rohrlänge des Rohrs 121 gleich der Rohrlänge des Rohrs 122 ist. Gemäß einer weiteren Ausgestaltung der Erfindung ist zudem die Rohrlänge des Rohrs 111 lediglich gleich der Rohrlänge des Rohrs 121, gleichwohl größer als die Rohrlänge sowohl des Rohrs 121 als auch des Rohrs 122, bzw. ist die Rohrlänge des Rohrs 121 lediglich gleich der Rohrlänge des Rohrs 122, gleichwohl kleiner als die Rohrlänge sowohl des Rohrs 111 als auch des Rohrs 112. **Nach einer weiteren Ausgestaltung der Erfindung ist von jedem der ersten und zweiten Rohre 111, 121 die jeweilige Rohrlänge jeweils größer als die Rohrlänge jedes der dritten und vierten Rohre 112, 122; dies im besonderen in der Weise, daß die Rohrlänge jedes der Rohre 111, 121 jeweils mehr als 101% der Rohrlänge und/oder jeweils weniger als 105% der Rohrlänge des Rohres 112 bzw. 122 beträgt.**

Die Rohrwandung jedes der Rohre 111, 121, 112, 122 der Rohranordnung weist jeweils eine vorgegebene - beispielsweise auch im wesentlichen einheitliche - Wandstärke auf und kann - wie bei Rohranordnungen der in Rede stehenden Art bzw. damit gebildeten Meßwandlern bzw. Meßsystemen durchaus üblich - beispielsweise aus gleichem Material und/oder einem Metall, beispielsweise nämlich jeweils einem Edelstahl oder jeweils einer Nickelbasislegierung, bestehen. Die Rohre 111, 121, 112, 122 können zudem beispielsweise jeweils einstückig ausgebildet, beispielsweise nämlich nahtlos oder zumindest im Falle einer Rohrwandung aus Metall mit einer geschweißten Naht hergestellt sein, und/oder jeweils durch Biegen eines rohrförmigen Halbzeugs geformt sein, beispielsweise derart, daß jedes der Rohre 111, 121, 112, 122 -wie auch in Fig. 2A, 2B, 3A und 3B bzw. 5A, 5B, 6A und 6B jeweils angedeutet - im wesentlichen V-förmig ausgebildet ist bzw. eine V-förmige Silhouette aufweist und/oder daß jedes der Rohre im Ergebnis eine in einer einzigen (Biege-)Ebene liegende Rohrform aufweist. Nach einer weiteren Ausgestaltung der Erfindung weist jedes der Rohre jeweils ein Kaliber, nämlich einen Innendurchmesser, auf, das nicht weniger als 20 mm, beispielsweise auch mehr als 40 mm beträgt und/oder das gleich ist dem Kaliber jedes der anderen der Rohre. Indem die beiden Rohre 111, 121 bzw. die beiden Rohre 121, 122 baugleich sind, ist das vorbezeichnete Kaliber des Rohrs 111 gleich dem Kaliber des Rohrs 121 bzw. ist das Kaliber des Rohrs 121 gleich dem Kaliber des Rohrs 122. Gemäß einer weiteren Ausgestaltung der Erfindung ist zudem das Kaliber jedes der Rohre 111, 112, 121, 122 gleich dem Kaliber jedes anderen der Rohre 111, 112, 121 bzw. 122 und/oder weist jedes der Rohre 111, 121, 112, 122 ferner jeweils ein Rohrlänge-zu Kaliber-Verhältnis, gemessen als ein Quotient der jeweiligen Rohrlänge zum jeweiligen Kaliber, auf, das größer als 25 (25:1), beispielsweise aber auch kleiner als 30(30:1) ist. Nach einer weiteren Ausgestaltung der Erfindung weist die Rohrwandung jedes der Rohre jeweils eine kleinste Wandstärke auf, die nicht weniger als 1 mm, beispielsweise auch mehr als 1,5 mm beträgt und/oder die gleich ist der kleinsten Wandstärke der Rohrwandung jedes der anderen der Rohre. Indem die beiden Rohre 111, 121 bzw. die beiden Rohre 121, 122 baugleich sind, ist die vorbezeichnete kleinste Wandstärke der Rohrwandung des Rohrs 111 gleich der kleinsten Wandstärke der Rohrwandung des Rohrs 121 bzw. ist die kleinste Wandstärke der Rohrwandung des Rohrs 121 gleich der kleinsten Wandstärke der Rohrwandung des Rohrs 122. Gemäß einer weiteren Ausgestaltung der Erfindung ist zudem die vorbezeichnete Wandstärke Rohrwandung jedes der Rohre 111, 112, 121, 122 gleich der kleinsten Wandstärke der Rohrwandung jedes anderen der Rohre 111, 112, 121 bzw. 122.

Zum Verbinden der Rohranordnung bzw. des damit gebildeten Meßwandlers oder Meßsystems mit der vorbezeichneten, das Fluid FL1 führenden Prozeßleitung kann der Strömungsteiler 21 einen - beispielsweise dem Anschluß der Rohranordnung an ein im Betrieb das Fluid FL1 zuführendes Leitungssegment nämlicher Prozeßleitung dienlichen - ersten Anschlußflansch und kann der Strömungsteiler 22 einen - beispielsweise dem Anschluß der Rohranordnung an ein das Fluid FL1 wieder abführendes Leitungssegment der Prozeßleitung dienlichen - zweiten Anschlußflansch aufweisen. An jedem der vorbezeichneten Anschlußflansche kann beispielsweise jeweils eine Dichtfläche zum fluiddichten bzw. leckagefreien Verbinden der Rohranordnung mit dem jeweils korrespondierenden Leitungssegment der Prozeßleitung ausgebildet sein. Jede der beiden Dichtflächen kann jeweils einen eine Nennweite des Meßwandlers definierenden kleinsten Durchmesser aufweisen, der mehr als 100 mm beträgt, und/oder einen - hier eine Einbaulänge der Rohranordnung bzw. des damit gebildeten Meßwandlers definierenden - kleinsten Abstand zur jeweils anderen der Dichtflächen aufweisen, der mehr als 1000 mm und/oder weniger als 3000 mm beträgt.

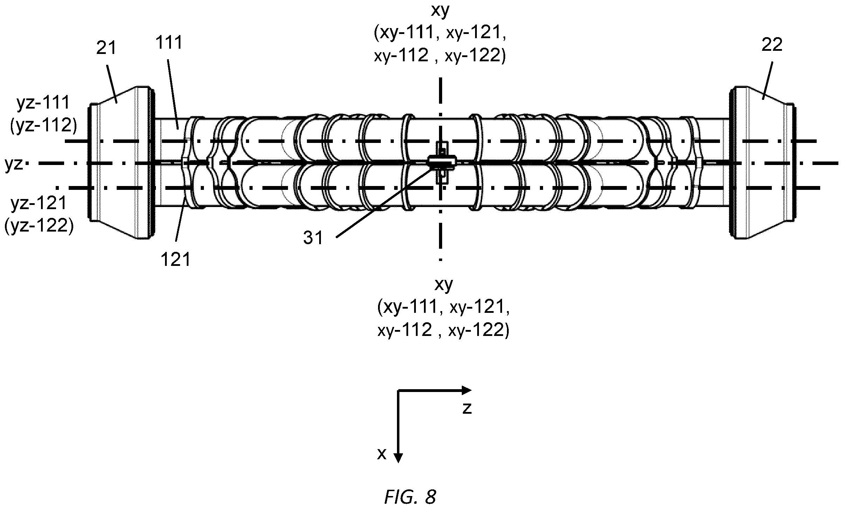

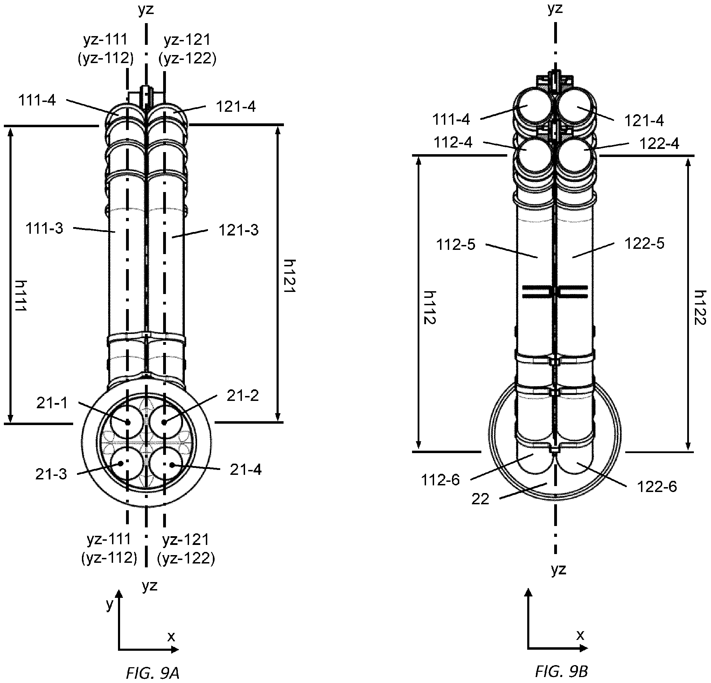

Die Rohre 111, 121, 112, 122 und die Strömungsteiler 21, 22 sind nach einer weiteren Ausgestaltung der Erfindung ferner so ausgebildet und angeordnet, daß die Rohranordnung, wie auch in Fig. 7A bzw. 7B schematisch dargestellt, eine erste gedachte Verbindungsachse z1, die einen Mittelpunkt der Strömungsöffnung 21-1 und einen Mittelpunkt der Strömungsöffnung 22-1 imaginär miteinander verbindet, eine zweite gedachte Verbindungsachse z2, die einen Mittelpunkt der Strömungsöffnung 21-2 und einen Mittelpunkt der Strömungsöffnung 22-2 imaginär miteinander verbindet, eine dritte gedachte Verbindungsachse z3, die einen Mittelpunkt der Strömungsöffnung 21-3 und einen Mittelpunkt der Strömungsöffnung 22-3 imaginär miteinander verbindet sowie eine vierte gedachte Verbindungsachse z4, die einen Mittelpunkt der Strömungsöffnung 21-4 und einen Mittelpunkt der Strömungsöffnung 22-4 imaginär miteinander verbindet, aufweist, derart, daß jede vorbezeichneten gedachten Verbindungsachsen z1, z2, z3, z4 jeweils parallel zu jeder anderen nämlicher Verbindungsachsen z1, z2, z3 bzw. z4 verläuft. Die Strömungsteiler 21, 22 können ferner so ausgebildet und zueinander angeordnet sein, daß jede der Verbindungsachsen z1, z2, z3 und z4 jeweils gleichlang ist wie jede andere der Verbindungsachsen z1, z2, z3 bzw. z4. Nach einer weiteren Ausgestaltung der Erfindung ist - wie auch aus Fig. 7A, 7B, 8, 9A bzw. 9B ohne weiteres ersichtlich -jedes der Rohre 111, 112, 121, 122 so geformt, daß es jeweils eine, beispielsweise nämlich einer jeweilige gedachte Längsschnittebene entsprechende, erste Symmetrieebene yz-111, yz-121, yz-112 bzw. yz-122 sowie eine dazu senkrechte, beispielsweise nämlich einer jeweiligen gedachten Querschnittebene entsprechende, zweite Symmetrieebene xy-111, xy-121, xy-112 bzw. xy-122 aufweist und daß es jeweils sowohl zur zugehörigen ersten Symmetrieebene als auch zur zugehörigen zweiten Symmetrieebene spiegelsymmetrisch ist. Die Rohre 111, 121, 112, 122 und die Strömungsteiler 21, 22 können ferner so ausgebildet und angeordnet sein, daß sowohl die Symmetrieebene yz-111 parallel zur Symmetrieebene yz-121 als auch die Symmetrieebene yz-112 parallel zur Symmetrieebene yz-122 verläuft und/oder daß sowohl die Symmetrieebene yz-111 koinzident mit der Symmetrieebene yz-112 als auch die Symmetrieebene yz-121 koinzident mit der Symmetrieebene yz-122 ist. Nach einer weiteren Ausgestaltung sind die Rohre 111, 121, 112, 122 und die Strömungsteiler 21, 22 ferner so ausgebildet und angeordnet, daß die Rohranordnung zumindest eine sowohl zwischen dem Rohr 111 und dem Rohr 121 als auch zwischen dem Rohr 112 und dem Rohr 122 verortete erste gedachte Symmetrieebene yz aufweist, bezüglich der die Rohranordnung, wie auch aus Fig. 8 und 9A bzw. deren Zusammenschau ohne weiteres ersichtlich, spiegelsymmetrisch ist. Die Rohranordnung kann - wie auch aus einer Zusammenschau der Fig. 7A, 7B, 8, 9A und 9B ohne weiteres ersichtlich - ferner so ausgebildet sein, daß deren erste Symmetrieebene yz beispielsweise parallel zu jeder der vorbezeichneten Symmetrieebenen yz-111, yz-121, yz-112, yz-122 der Rohre 111, 121, 112 bzw. 122 ausgerichtet und/oder jeweils im gleichen Abstand zu jeder der vorbezeichneten Symmetrieebenen yz-111, yz-121, yz-112, yz-122 der Rohre 111, 121, 112 bzw. 122 angeordnet ist; dies beispielsweise auch derart, daß die beiden Rohre 111, 121 jeweils zueinander bzw. zur vorbezeichneten Symmetrieebene yz der Rohranordnung und die beiden Rohre 112, 122 jeweils zueinander bzw. zur Symmetrieebene yz der Rohranordnung parallel sind und/oder daß die beiden Rohre 111, 121 in einer gemeinsamen ersten gedachten Rohrebene liegen und die Rohre 121, 122 in einer gemeinsamen zweiten gedachten Rohrebene liegen. Dementsprechend weist nach einer weiteren Ausgestaltung der Erfindung das Rohr 111 zur Symmetrieebene yz der Rohranordnung einen kleinsten Abstand auf, der gleich einem kleinsten Abstand ist, den das Rohr 112 zur nämlicher Symmetrieebene yz aufweist und/oder weist das Rohr 121 zur gedachten Symmetrieebene yz der Rohranordnung einen kleinsten Abstand auf, der gleich einem kleinsten Abstand ist, den das Rohr 122 zu nämlicher Symmetrieebene yz aufweist. Nach einer weiteren Ausgestaltung der Erfindung ist ferner vorgesehen, daß die Rohranordnung außer der vorbezeichneten ersten Symmetrieebene yz eine dazu senkrechte, gleichwohl jedes der Rohre imaginär schneidende zweite Symmetrieebene xy aufweist und auch bezüglich nämlicher zweiten gedachten Symmetrieebene xy spiegelsymmetrisch ist.

Nach einer Ausgestaltung der Erfindung ist jedes der Rohre 111, 121, 112, 122 der Rohranordnung jeweils dafür eingerichtet, in dessen jeweiligen Lumen Fluid, beispielsweise nämlich jeweils ein Teilvolumen des zu messenden Fluids FL1, zu führen und währenddessen vibrieren gelassen zu werden, beispielsweise nämlich jeweils - beispielsweise einen mit der wenigstens einen Meßgröße korrespondierenden Meßeffekt bewirkende und/oder mittels der Erregeranordnung angeregte - erzwungene mechanische Schwingungen um eine jeweils zughörige statische Ruhelage auszuführen; dies im besonderen in der Weise, daß jedes der Rohre der Rohranordnung vibrieren gelassenen und währenddessen ausgehend von dessen jeweiligen ersten Ende in Richtung von dessen jeweiligen zweiten Ende von Fluid durchströmt wird. Die vorbezeichneten erzwungenen mechanischen Schwingungen können, wie bei Meßwandlern der in Rede stehenden Art durchaus üblich, zumindest anteilig erzwungene Biegeschwingungen der Rohre um eine jeweilige gedachte, nämlich das jeweiligen Rohr imaginär schneidende Schwingungsachse der Rohranordnung sein; dies im besonderen auch in der Weise, daß die vorbezeichneten (vier) gedachten Schwingungsachsen - beispielsweise bei in statischer Ruhelage befindlichen Rohren - zueinander und/oder zu den vorbezeichneten gedachten Verbindungsachsen z1, z2, z3, z4 im wesentlichen parallel sind.

Die Erregeranordnung ist nach einer Ausgestaltung der Erfindung beispielsweise dafür vorgesehen bzw. eingerichtet, dorthin eingespeiste elektrische Leistung in erzwungene mechanische Schwingungen, beispielswiese nämlich Biegeschwingungen, der Rohre der Rohranordnung um eine jeweilige statische Ruhelage zu wandeln, während die Sensoranordnung beispielsweise dafür vorgesehen bzw. eingerichtet ist, mechanische Schwingungen nämlicher Rohre, nicht zuletzt mittels der Erregeranordnung erzwungene mechanische Schwingungen und/oder Biegeschwingungen der Rohre, zu erfassen und ein erstes Schwingungsmeßsignal s41, ein zweites Schwingungsmeßsignal s42, ein drittes Schwingungsmeßsignal s43 sowie ein viertes Schwingungsmeßsignal s44 bereitzustellen, von welchen - beispielsweise elektrischen - Schwingungsmeßsignalen s41, s42, s43, s44 jedes zumindest anteilig Schwingungsbewegungen eines oder mehrerer der Rohre 111, 121, 112, 122 der Rohranordnung repräsentiert, beispielsweise jeweils mittels einer jeweiligen, mit Schwingungsbewegungen der Rohre korrespondierenden veränderlichen elektrischen Spannung; dies im besonderen in der Weise, daß die ersten und zweiten Schwingungsmeßsignale s41, s42 einer Änderung einer Massendurchflußrate des in der Rohranordnung geführten Meßstoffs mit einer Änderung einer ersten Phasendifferenz, nämlich einer Änderung einer Differenz zwischen einem Phasenwinkel des Schwingungsmeßsignals s41 und einem Phasenwinkel des Schwingungsmeßsignals s42 folgen und daß die dritten und vierten Schwingungsmeßsignale s43, s44 einer Änderung einer Massendurchflußrate des in der Rohranordnung geführten Meßstoffs mit einer Änderung einer zweiten Phasendifferenz, nämlich einer Änderung einer Differenz zwischen einem Phasenwinkel des Schwingungsmeßsignals s43 und einem Phasenwinkel des Schwingungsmeßsignals s44 folgen, und/oder in der Weise, daß jedes der vorbezeichneten Schwingungsmeßsignale s41, s42, s43, s44 einer Änderung einer Dichte des in der Rohranordnung geführten Meßstoffs jeweilis mit einer Änderung einer jeweiligen Signalfrequenz wenigstens einer spektrale Signalkomponente folgt. Zum Anregen und Aufrechterhalten von erzwungen mechanischen Schwingungen der Rohre weist die Erregeranordnung gemäß einer weiteren Ausgestaltung der Erfindung einen - beispielsweise elektrodynamischen - ersten Schwingungserreger 31 sowie wenigstens einen - beispielsweise elektrodynamischen und/oder zum ersten Schwingungserreger 31 baugleichen - zweiten Schwingungserreger 32 auf. Wie auch in Fig. 3A, 3B, 6A, 6B, 7A und 7B angedeutet bzw. aus deren Zusammenschau ohne weiteres ersichtlich, kann beispielsweise der Schwingungserreger 31 mit jedem der beiden Rohre 111, 121 und der Schwingungserreger 32 mit jedem der beiden Rohre 112, 122 mechanischen verbunden sein. Jeder der beiden Schwingungserrerger 31, 32 ist gemäß einer Ausgestaltung der Erfindung ferner dafür vorgesehen bzw. eingerichtet, von der Meß- und Betriebselektronik ME eingespeiste elektrische Leistung in erzwungene mechanische Schwingungen der mit dem jeweiligen Schwingungserreger 31 bzw. 32 jeweils verbundenen Rohre 111, 121 bzw. 112, 122 bewirkende mechanische Leistung zu wandeln; dies im besonderen in der Weise, daß der Schwingungserreger 31 differenziell auf die die beiden Rohre 111, 121 wirkt, nämlich lediglich gegengleiche Anregungskräfte in die beiden Rohre 111, 121 einleiten kann bzw. einleitet, und daß der Schwingungserreger 32 differenziell auf die beiden Rohre 112, 122 wirkt, nämlich lediglich gegengleiche Anregungskräfte in die beiden Rohre 112, 122 einleiten kann bzw. einleitet.

Zum Erzeugen der vorbezeichneten Schwingungsmeßsignale s41, s42, s43, s44 weist die Sensoranordnung gemäß einer weiteren Ausgestaltung der Erfindung einen, beispielsweise elektrodynamischen, ersten Schwingungssensor 41 für das Schwingungsmeßsignal s41, einen - beispielsweise elektrodynamischen und/oder zum ersten Schwingungssensor 41 baugleichen - zweiten Schwingungssensor 42 für das Schwingungsmeßsignal s42, einen - beispielsweise elektrodynamischen und/oder zum ersten Schwingungssensor 41 baugleichen - dritten Schwingungssensor für das Schwingungsmeßsignal s43 sowie wenigstens einen - beispielsweise elektrodynamischen und/oder zum dritten Schwingungssensor 43 baugleichen - vierten Schwingungssensor 44 für das Schwingungsmeßsignal s44 auf. Wie auch in Fig. 3A, 3B, 6A, 6B, 7A, und 7B angedeutet bzw. aus deren Zusammenschau ohne weiteres ersichtlich, können beispielsweise sowohl der Schwingungssensor 41 als auch der Schwingungssensor 42 mit jedem der beiden Rohre 111, 121 mechanischen verbunden sein und können beispielsweise sowohl der Schwingungssensor 43 als auch der Schwingungssensor 44 mit jedem der beiden Rohre 112, 122 mechanischen verbunden sein, beispielsweise derart, daß der Schwingungssensor 41 und der der Schwingungssensor 43 jeweils einlaßseitige Schwingungsbewegungen der Rohre 111, 121, 112 bzw. 122 erfassen und daß der Schwingungssensor 42 und der der Schwingungssensor 44 jeweils ausaßseitige Schwingungsbewegungen der Rohre 111, 121, 112 bzw. 122. Beispielsweise können die Schwingungssensoren auch in der Weise positioniert sein, daß der Schwingungssensor 41 gleichweit vom Strömungsteiler 21 beabstandet ist wie der Schwingungssensor 42 vom Strömungsteiler 22 und/oder daß der Schwingungssensor 43 gleichweit vom Strömungsteiler 21 beabstandet ist wie der Schwingungssensor 44 vom Strömungsteiler 22, und/oder in der Weise, daß die beiden Schwingungssensoren 41, 42 jeweils gleichweit vom vorbezeichneten Schwingungserreger 31 und/oder die beiden Schwingungssensoren 43, 44 jeweils gleichweit vom vorbezeichneten Schwingungserreger 32 positioniert sind. Gemäß einer weiteren Ausgestaltung der Erfindung ist jeder der vorbezeichneten Schwingungssensoren 41, 42 ferner dafür vorgesehen bzw. eingerichtet, entgegengesetzte, ggf. auch gegengleiche, Schwingungsbewegungen der Rohre 111, 121 zu erfasssen und in das (nämliche Schwingungsbewegungen jeweils repräsentierende) jeweilige Schwingungsmeßsignal s41, s42 zu wandeln und ist jeder der vorbezeichneten Schwingungssensoren 43, 44 ferner dafür vorgesehen bzw. eingerichtet, entgegengesetzte, ggf. auch gegengleiche, Schwingungsbewegungen der Rohre 112, 122 zu erfasssen und in das (nämliche Schwingungsbewegungen jeweils repräsentierende) jeweilige Schwingungsmeßsignal s43, s44 zu wandeln; dies im besonderen in der Weise, daß jeder der Schwingungssensoren 41, 42 die Schwingungsbewegungen der beiden Rohr 111, 121 differenziell erfaßt, nämlich lediglich entgegengesetzte Schwingungsbewegungen nämlicher Rohre 111, 121 in das jeweilige Schwingungsmeßsignal wandelt, und jeder der Schwingungssensoren 43, 44 die Schwingungsbewegungen der beiden Rohr 112, 122 differenziell erfaßt, nämlich lediglich entgegengesetzte Schwingungsbewegungen nämlicher Rohre 112, 122 in das jeweilige Schwingungsmeßsignal wandelt. Zur Verringerung der Anzahl an benötigten Verbindungsleitungen zur Meß- und Betriebselektronik ME können die beiden Schwingungssensoren 41, 43 elektrisch in Serie geschaltet sein, derart, daß die beiden Schwingungsmeßsignale s41, s43 einander überlagern, und/oder können die beiden Schwingungssensoren 42, 44 elektrisch in Serie geschaltet sein, derart, daß die beiden Schwingungsmeßsignale s42, s44 einander überlagern.

Neben dem Meßwandler MW umfaßt das erfindungsgemäße Meßsystem ferner eine sowohl mit der vorbezeichneten Erregeranordnung des Meßwandlers als auch mit der vorbezeichneten Sensoranordnung des Meßwandlers elektrisch gekoppelte Meß- und Betriebselektronik ME. Nämliche Meß- und Betriebselektronik ME kann beispielsweise mittels wenigstens eines Mikroprozessors und/oder mittels wenigstens eines digitalen Signalprozessors gebildete und/oder sowohl mit Erregeranordnung 30 als auch der Sensoranordnung jeweils mittels elektrischer Verbindungsleitungen elektrisch gekoppelt sein. Darüberhinaus kann die Meß- und Betriebselektronik ME, wie auch in Fig. 1, 2A und 2B bzw. 4, 5A, 5B, jeweils angedeutet, in einem, beispielsweise explosions- bzw. druckfesten und/oder die Meß- und Betriebselektronik ME gegen Spritzwasser schützendes, Elektronik-Schutzgehäuse 100 untergebracht sein. Nach einer weiteren Ausgestaltung der Erfindung ist die Meß- und Betriebselektronik eingerichtet, wie auch in Fig. 3B bzw. 6B angedeutet, zumindest zeitweise ein elektrisches erstes Treibersignal e31 zu generieren und damit elektrische Leistung in die Erregeranordnung einzuspeisen, derart, daß sowohl das Rohr 111 als auch das Rohr 121 jeweils zumindest anteilig Nutzschwingungen, nämlich erzwungene mechanische Schwingungen mit einer ersten Nutzfrequenz, nämlich einer durch das Treibersignal e31 vorgegebenen Schwingungsfrequenz ausführt. Darüberhinaus ist die Meß- und Betriebselektronik ferner eingerichtet, zumindest zeitweise - beispielsweise auch zeitgleich mit dem Treibersignal e31 - ein elektrisches zweites Treibersignal e32 zu generieren und damit elektrische Leistung in die Erregeranordnung einzuspeisen, derart, daß sowohl das Rohr 112 als auch das Rohr 122 - beispielsweise auch zeitgleich mit den anderen beiden Rohren 111, 121 -jeweils zumindest anteilig Nutzschwingungen, nämlich erzwungene mechanische Schwingungen mit wenigstens einer, beispielsweise von der ersten Nutzfrequenz abweichenden, zweiten Nutzfrequenz, nämlich einer durch das elektrische Treibersignal e32 vorgegebenen Schwingungsfrequenz ausführt. Die vorbezeichnete erste Nutzfrequenz kann beispielsweise einer von der Dichte des in der Rohranordnung geführten Fluid FL1 abhängigen ersten Resonanzfrequenz der Rohranordnung - beispielsweise nämlich einer niedrigsten gemeinsamen Resonanzfrequenz eines mittels der Rohre 111, 121 gebildeten ersten Rohrpaares - entsprechen und die vorbezeichnete zweite Nutzfrequenz kann beispielsweise einer von der Dichte des in der Rohranordnung geführten Fluid FL1 abhängigen, ggf. auch von der ersten Resonanzfrequenz abweichenden, zweiten Resonanzfrequenz der Rohranordnung - beispielsweise nämlich einer niedrigsten gemeinsamen Resonanzfrequenz eines mittels der Rohre 112, 122 gebildeten zweiten Rohrpaares - entsprechen. Zudem kann die Meß- und Betriebselektronik auch dafür vorgesehen bzw. eingerichtet sein, die vorbezeichneten Schwingungsmeßsignale s41, s42, s43, s44 zu empfangen und auszuwerten, nämlich anhand von deren vorbezeichneter ersten Phasendifferenz und/oder anhand von deren vorbezeichneter zweiten Phasendifferenz die Massendurchflußrate des Fluids FL1 repräsentierende Massendurchfluß-Meßwerte zu generieren und/oder anhand wenigstens einer Signalfrequenz wenigstens eines der Schwingungsmeßsignale s41, s42, s43, s44, beispielsweise nämlich anhand einer der vorbezeichneten ersten Nutzfrequenz entsprechenden Signalfrequenz wenigstens eines der Schwingungsmeßsignale s41, s42 und/oder anhand einer der vorbezeichneten zweiten Nutzfrequenz entsprechenden Signalfrequenz wenigstens eines der Schwingungsmeßsignale s43, s44, die Dichte des Fluids FL1 repräsentierende Dichte-Meßwerte zu generieren. Alternativ oder in Ergänzung kann die Meß- und Betriebselektronik auch dafür vorgesehen bzw. eingerichtet sein, anhand wenigstens eines der Schwingungsmeßsignale s41, s42, s43, s44, und/oder wenigstens eines der vorbezeichneten Treibersignale e31, e32 die Viskosität des Fluids FL1 repräsentierende Viskositäts-Meßwerte zu generieren

Bei dem erfindungsgemäßen Meßwandler (bzw. dem damit gebildeten Meßsystem) weist - wie auch in Fig. 7A, und 7B schematisch dargestellt bzw. aus deren Zusammenschau ohne weiteres ersichtlich - jedes der Rohre 111, 112, 121, 122 der Rohranordnung im besonderen jeweils wenigstens ein mit dem Strömungsteiler 21, beispielsweise stoff- und/oder kraft- und/oder formschlüssig, verbundenes gerades erstes Teilsegment 111-1, 121-1, 112-1 bzw. 122-1, ein an nämliches erstes Teilsegment 111-1, 121-1, 112-1 bzw. 122-1 anschließendes kreisbogenförmiges zweites Teilsegment 111-2, 121-2, 112-2 bzw. 122-2, ein an nämliches zweites Teilsegment 111-2, 121-2, 112-2 bzw. 122-2 anschließendes gerades drittes Teilsegment 111-3, 121-3, 112-3 bzw. 122-3, ein an nämliches drittes Teilsegment 111-3, 121-3, 112-3 bzw. 122-3 anschließendes kreisbogenförmiges viertes Teilsegment 111-4, 121-4, 112-4 bzw. 122-4, ein an nämliches viertes Teilsegment 111-4, 121-4, 112-4 bzw. 122-4 anschließendes gerades, zum jeweiligen dritten Teilsegment 111-3, 121-3, 112-3 bzw. 122-3 baugleiches fünftes Teilsegment 111-5, 121-5, 112-5, 122-5, ein an nämliches fünftes Teilsegment 111-5, 121-5, 112-5 bzw. 122-5 anschließendes kreisbogenförmiges, zum jeweiligen zweiten Teilsegment 111-2, 121-2, 112-2 bzw. 122-2 sowohl formgleiches als auch größengleiches sechstes Teilsegment 111-6, 121-6, 112-6 bzw. 122-6 sowie ein sowohl an nämliches sechstes Teilsegment 111-6, 121-6, 112-6 bzw. 122-6 anschließendes als auch mit dem Strömungsteiler 22, beispielsweise stoff- und/oder kraft- und/oder formschlüssig, verbundenes gerades zum jeweiligen ersten Teilsegment 111-1, 121-1, 112-1 bzw. 122-1 sowohl formgleiches als auch größengleiches siebentes Teilsegment 111-7, 121-7, 112-7 bzw. 122-7 auf.

Jedes der vorbezeichneten gerade Teilsegmente 111-1, 121-1, 112-1, 122-1, 111-3, 121-3, 112-3, 122-3, 111-5, 121-5, 112-5, 122-5, 111-7, 121-7, 112-7 bzw. 122-7 kann im besonderen auch hohlzylindrisch, nämlich in Form eines geraden Kreiszylinders mit einer entlang seiner gedachten Längsachse verlaufenden zylindrischen Durchgangsöffnung und - abgesehen von herstellungsbedingten geringfügigen lokalen Verformungen - mit überall im wesentlichen gleichen Wandstärke bzw. einem überall im wesentlichen gleichen Kaliber, ausgebildet sein; gleichermaßen kann auch jedes der vorbezeichneten kreisbogenförmigen Teilsegmente 111-2, 121-2, 112-2, 122-2, 111-4, 121-4, 112-4, 122-4, 111-6, 121-6, 112-6 bzw. 122-6 eine überall im wesentlichen gleiche Wandstärke bzw. ein überall im wesentlichen gleiches Kaliber aufweisen, beispielsweise auch derart, daß jedes der Rohre - abgesehen von herstellungsbedingten geringfügigen lokalen Verformungen - überall im wesentlichen die gleiche Wandstärke bzw. überall im wesentlichen das gleiche Kaliber und das jeweils eingeschlossene Lumen überall im wesentliche kreisförmige Strömungsquerschnitte aufweisen. Für den vorbezeichneten Fall, daß die Rohranordnung sowohl die Symmetrieebene yz als auch die dazu senkrechte Symmetrieebene xy aufweist ist nach einer weiteren Ausgestaltung der Erfindung ferner vorgesehen, daß nämliche Symmetrieebene xy - wie auch aus einer Zusammenschau der Fig. 7A und 7B ohne weiteres ersichtlich - jedes der Rohre jeweils in dessen jeweiligen viertem Teilsegment 111-4, 121-4, 112-4 bzw. 122-4 imaginär schneidet. Nach einer weiteren Ausgestaltung der Erfindung weist jedes der Rohre, wie auch in Fig. 9B angedeutet bzw. auch aus einer Zusammenschau der Fig. 7A, 7B, 9A und 9B ohne weiteres ersichtlich, ferner jeweils eine Rohrbogenhöhe h111, h121, h112, h122, gemessen - hier auch innerhalb der vorbezeichneten Symmetrieebene xy - als ein kleinster Abstand des jeweiligen vierten Teilsegments 111-4, 121-4, 112-4 bzw. 122-4 zur zugehörigen, nämlich dessen jeweilige ersten und zweiten Ende imaginär verbindenden gedachten Verbindungsachse z1, z2, z3 bzw. z4 auf, welche Rohrbogenhöhe jeweils so gewählt ist, daß jedes der Rohre 111, 121, 112, 122 jeweils ein Rohrlänge-zu-Rohrbogenhöhe-Verhältnis, gemessen als ein Quotient der Rohrlänge des jeweiligen Rohrs zur jeweiligen Rohrbogenhöhe, aufweist, das größer als 2 (2:1), beispielsweise größer als 2,5 (2,5:1), und kleiner als 5 (5:1), beispielsweise kleiner als 3 (3:1), ist, und/oder daß jedes der Rohre 111, 121, 112, 122 jeweils ein Kaliber-zu-Rohrbogenhöhe-Verhältnis, gemessen als ein Quotient des Kalibers des jeweiligen Rohrs zur jeweiligen Rohrbogenhöhe aufweist, das größer als 0,1, beispielsweise auch kleiner als 0,2 ist; dies beispielsweise auch derart, daß ein kleinstes Rohrlänge-zu-Rohrbogenhöhe-Verhältnis von einem größten Rohrlänge-zu-Rohrbogenhöhe-Verhältnis um weniger als 5% des größten Rohrlänge-zu-Rohrbogenhöhe-Verhältnisses abweicht und/oder derart, daß ein kleinstes Kaliber-zu-Rohrbogenhöhe-Verhältnis von einem größten Kaliber-zu-Rohrbogenhöhe-Verhältnis um weniger als 5% des größten Kaliber-zu-Rohrbogenhöhe-Verhältnisses abweicht.

Jedes der geraden Teilsegmente 111-1, 121-1, 112-1, 122-1, 111-3, 121-3, 112-3, 122-3, 111-5, 121-5, 112-5, 122-5, 111-7, 121-7, 112-7 bzw. 122-7 weist (naturgemäß) jeweils eine einer Länge einer jeweiligen gedachten Längsachse nämlichen Teilsegments entsprechende Segmentlänge auf.

Zudem weist jedes der kreisbogenförmigen Teilsegmente 111-2, 121-2, 112-2, 122-2, 111-4, 121-4, 112-4, 122-4, 111-6, 121-6, 112-6 bzw. 122-6 (naturgemäß) jeweils eine einer gestreckten Länge einer gedachten kreisbogenförmigen Mittellinie nämlichen Teilsegments entsprechende Segment- oder auch Bogenlänge, einen einem Radius nämlicher gedachten kreisbogenförmigen Mittellinie entsprechenden, beispielsweise jeweils nicht weniger als 50 mm betragenden, Bogenradius und einen einem Verhältnis nämlicher Segmentlänge zu nämlichem Bogenradius entsprechenden Mittelpunktswinkel auf, beispielsweise derart, daß die jeweilige Segmentlänge und/oder der jeweilige Bogenradius von jedem der kreisbogenförmigen Teilsegmente 111-2, 121-2, 112-2, 122-2, 111-3, 121-3, 112-3, 122-3, 111-4, 121-4, 112-4, 122-4, 111-5, 121-5, 112-5, 122-5, 111-6, 121-6, 112-6 bzw. 122-6 jeweils nicht weniger als 150% des Kalibers des jeweiligen Rohrs 111, 121, 112, 122 beträgt. Zudem sind beim erfindungsgemäßen Meßwandler die ersten und siebten Teilsegmente 111-1, 112-1, 112-7, 112-7 der ersten und zweiten Rohre 111, 112 sowohl formgleich als auch größengleich, derart, daß von jedem dieser Teilsegmente 111-1, 112-1, 112-7, 112-7 dessen Segmentlänge jeweils gleich groß ist wie die Segmentlänge jedes der anderen nämlicher Teilsegmente 111-1, 112-1, 112-7, 112-7; gleichermaßen sind auch die ersten und siebten Teilsegmente 121-1, 122-1, 121-7, 122-7 der dritten und vierten Rohre 121, 122 sowohl formgleich als auch größengleich, derart, daß von jedem dieser Teilsegmente 121-1, 122-1, 122-7, 122-7 dessen Segmentlänge jeweils gleich groß ist wie die Segmentlänge jedes der anderen nämlicher Teilsegmente 121-1, 122-1, 122-7, 122-7.

Nach einer weiteren Ausgestaltung der Erfindung sind zudem die Teilsegmente 111-4, 121-4 der Rohre 111, 121 sowohl formgleich als auch größengleich, derart, daß von jedem der beiden Teilsegmente 111-4, 121-4 sowohl dessen Segmentlänge als auch dessen Bogenradius sowie dessen Mittelpunktswinkel jeweils gleich groß ist wie die Segmentlänge, der Bogenradius bzw. der Mittelpunktswinkel des jeweils anderen der beiden Teilsegmente 111-4, 121-4 und sind die Teilsegmente 112-4 und 122-4 sowohl formgleich als auch größengleich, derart, daß von jedem der Teilsegmente 112-4 und 122-4 sowohl dessen Segmentlänge als auch dessen Bogenradius sowie dessen Mittelpunktswinkel jeweils gleich groß ist wie die Segmentlänge, der Bogenradius bzw. der Mittelpunktswinkel des jeweils anderen der der vierten Teilsegmente 112-4 bzw. 122-4 der Rohre 112, 122. Nach einer anderen Ausgestaltung der Erfindung sind die Teilsegmente 111-4 und 121-4 der Rohre 111, 121 jeweils größer als die Teilsegmente 112-4, 122-4, derart, daß von jedem der Teilsegmente 111-4, 121-4 dessen jeweilige Segmentlänge und/oder dessen Bogenradius jeweils größer ist als die Segmentlänge bzw. der Bogenradius jedes der Teilsegmente 112-4 und 122-4; dies im besonderen in der Weise, daß die Segmentlänge jedes der Teilsegmente 111-4, 121-4 jeweils nicht weniger als 130% der Segmentlänge der Teilsegmente 112-4 bzw. 122-4, und/oder nicht mehr als 200% der Segmentlänge der Teilsegmente 112-4 bzw. 122-4, beträgt und/oder daß der Bogenradius jedes der Teilsegmente 111-4, 121-4 jeweils nicht weniger als 130% des Bogenradius der Teilsegmente 112-4 bzw. 122-4und/oder nicht mehr als 200% des Bogenradius der Teilsegmente 112-4 bzw. 122-4, beträgt.

Nicht zuletzt für den erwähnten Fall, daß sowohl die vorbezeichnete Symmetrieebene yz-111 koinzident mit der vorbezeichneten Symmetrieebene yz-112 als auch die vorbezeichnete Symmetrieebene yz-121 koinzident mit der vorbezeichneten Symmetrieebene yz-122 ist, kann zudem von jedem der (größeren) Teilsegmente 111-4, 121-4 auch dessen jeweiliger Bogenradius jeweils größer sein als der Bogenradius jedes der (kleineren) Teilsegmente 112-4 und 122-4; dies im besonderen in der Weise, daß der Bogenradius jedes der Teilsegmente 111-4, 121-4 jeweils 200% des Bogenradius der Teilsegmente 112-4 bzw. 122-4 beträgt. Alternativ oder in Ergänzung können die Rohre vorteilhaft zudem so ausgebildet und angeordnet sein, daß die kreisbogenförmigen Teilsegmente 111-4, 121-4, 112-4, 122-4 bzw. die gedachten kreisbogenförmigen Mittellinie nämlicher Teilsegmente 111-4, 121-4, 112-4, 122-4 in Projektion auf die erste Symmetrieebene yz zueinander parallel verlaufen bzw. daß die kreisbogenförmigen Mittellinien Teilsegmente 111-4, 121-4, 112-4, 122-4 in Projektion auf die erste Symmetrieebene yz Bogensegmente von konzentrischen Kreisen sind.

Für den Fall, daß die Sensoranordnung mittels der vorbezeichneten vier Schwingungssensoren 41, 42, 43, 44 gebildet ist, kann beispielsweise - wie auch aus Fig. 7A und 7B bzw. deren Zusammenschau ersichtlich - der Schwingungssensor 41 sowohl vom Teilsegment 111-2 als auch vom Teilsegment 111-4 beabstandet am Teilsegment 111-3 des Rohrs 111 sowie sowohl vom Teilsegment 121-2 als auch vom Teilsegment 121-4 beabstandet am Teilsegment 121-3 des Rohrs 121, der Schwingungssensor 42 sowohl vom Teilsegment 111-6 als auch vom Teilsegment 111-4 beabstandet am Teilsegment 111-5 des Rohrs 111 sowie sowohl vom Teilsegment 121-6 als auch vom Teilsegment 121-4 beabstandet am Teilsegment 121-5 des Rohrs 121, der Schwingungssensor 43 sowohl vom Teilsegment 112-2 als auch vom Teilsegment 112-4 beabstandet am Teilsegment 112-3 des Rohrs 112 sowie sowohl vom Teilsegment 122-2 als auch vom Teilsegment 122-4 beabstandet am Teilsegment 122-3 des Rohrs 122 bzw. der Schwingungssensor 44 sowohl vom Teilsegment 112-6 als auch vom Teilsegment 112-4 beabstandet am Teilsegment 112-5 des Rohrs 112 sowie sowohl vom Teilsegment 121-6 als auch vom Teilsegment 122-4 beabstandet am Teilsegment 122-5 des Rohrs 122 angebracht sein; dies beispielsweise auch derart, daß keiner der Schwingungssensoren 41, 42, 43, 44 zwischen allen Rohren 111, 121, 112, 122 angeordnet ist, sondern daß der Schwingungssensor 41 lediglich teilweise zwischen dem Teilsegment 111-3 und dem Teilsegment 121-3 gleichwohl weder zwischen den Teilsegmenten 111-3 und 112-3 noch zwischen den Teilsegmenten 121-3 und 122-3, der Schwingungssensor 42 lediglich teilweise zwischen dem Teilsegment 111-5 und dem Teilsegment 112-5 gleichwohl weder zwischen den Teilsegmenten 111-5 und 112-5 noch zwischen den Teilsegmenten 121-5 und 122-5, der Schwingungssensor 43 lediglich teilweise zwischen dem Teilsegment 112-3 und dem Teilsegment 122-3 gleichwohl wederzwischen den Teilsegmenten 112-3 und 111-3 noch zwischen den Teilsegmenten 122-3 und 121-3 sowie der Schwingungssensor 44 lediglich teilweise zwischen dem Teilsegment 112-5 und dem Teilsegment 122-5 gleichwohl weder zwischen den Teilsegmenten 112-5 und 111-5 noch zwischen den Teilsegmenten 122-5 und 121-5 positioniert sind, oder aber der beispielsweise auch derart, daß - wie auch in Fig. 6A und 6B bzw. 7A und 7B schematisch dargestellt - der Schwingungssensor 41 sowohl teilweise zwischen dem Teilsegment 111-3 und dem Teilsegment 112-3 als auch teilweise zwischen dem Teilsegment 121-3 und dem Teilsegment 122-3 und der Schwingungssensor 42 sowohl teilweise zwischen dem Teilsegment 111-5 und dem Teilsegment 112-5 als auch teilweise zwischen dem Teilsegment 121-5 und dem Teilsegment 122-5 positioniert ist und/oder daß der Schwingungssensor 43 sowohl teilweise zwischen dem Teilsegment 111-3 und dem Teilsegment 112-3 als auch teilweise zwischen dem Teilsegment 121-3 und dem Teilsegment 122-3 und der Schwingungssensor 44 sowohl teilweise zwischen dem Teilsegment 111-5 und dem Teilsegment 112-5 als auch teilweise zwischen dem Teilsegment 121-5 und dem Teilsegment 122-5 positioniert ist. Zudem können die Schwingungssensoren 41, 42 sowohl jeweils gleichweit vom Teilsegment 111-4 als auch jeweils gleichweit vom Teilsegment 121-4 beabstandet sein und/oder können die Schwingungssensoren 43, 44 sowohl jeweils gleichweit vom Teilsegment 112-4 als auch jeweils gleichweit vom Teilsegment 122-4 beabstandet sein. Für den anderen erwähnten Fall, daß die Erregeranordnung mittels der vorbezeichneten zwei Schwingungserreger 31, 32 gebildet ist, kann beispielsweise - wie auch aus Fig. 7A und 7B bzw. deren Zusammenschau ersichtlich - der Schwingungserreger 31 sowohl vom Teilsegment 111-3 als auch vom Teilsegment 111-5 beabstandet am Teilsegment 111-4 des Rohrs 111 sowie sowohl vom Teilsegment 121-3 als auch vom Teilsegment 121-5 beabstandet am Teilsegment 121-4 des Rohrs 121-4 angebracht sein und kann der Schwingungserreger 32 sowohl vom Teilsegment 112-3 als auch vom Teilsegment 112-5 beabstandet am Teilsegment 112-4 des Rohrs 112 sowie sowohl vom Teilsegment 122-3 als auch vom Teilsegment 122-5 beabstandet am Teilsegment 122-4 des Rohrs 122 angebracht sein; dies beispielsweise auch derart, daß der Schwingungserreger 31 sowohl vom Teilsegment 111-3 und vom Teilsegment 111-5 des Rohrs 111 als auch vom Teilsegment 121-3 und vom Teilsegment 121-5 des Rohrs 121 jeweils gleichweit beabstandet ist und/oder daß der Schwingungserreger 32 sowohl vom Teilsegment 112-3 und vom Teilsegment 112-5 des Rohrs 112 als auch vom Teilsegment 122-3 und vom Teilsegment 122-5 des Rohrs 122 jeweils gleichweit beabstandet ist; dies beispielsweise auch derart, daß keiner der Schwingungserreger 31, 32 zwischen allen Rohren 111, 121, 112, 122 angeordnet ist, sondern daß der Schwingungserreger 31 lediglich teilweise zwischen dem Teilsegment 111-4 und dem Teilsegment 121-4 gleichwohl weder zwischen den Teilsegmenten 111-4 und 112-4 noch zwischen den Teilsegmenten 121-4 und 122-4 sowie der Schwingungserreger 32 lediglich teilweise zwischen dem Teilsegment 112-4 und dem Teilsegment 122-4 gleichwohl weder zwischen den Teilsegmenten 112-4 und 111-4 noch zwischen den Teilsegmenten 122-4 und 121-4 positioniert sind oder beispielsweise auch derart, daß - wie auch in Fig. 6A und 6B bzw. 7A und 7B jeweils dargestellt - zumindest einer der Schwingungserreger 31, 32 sowohl teilweise zwischen dem Teilsegment 111-4 und dem Teilsegment 112-4 als auch teilweise zwischen dem Teilsegment 121-4 und dem Teilsegment 122-4 positioniert ist.

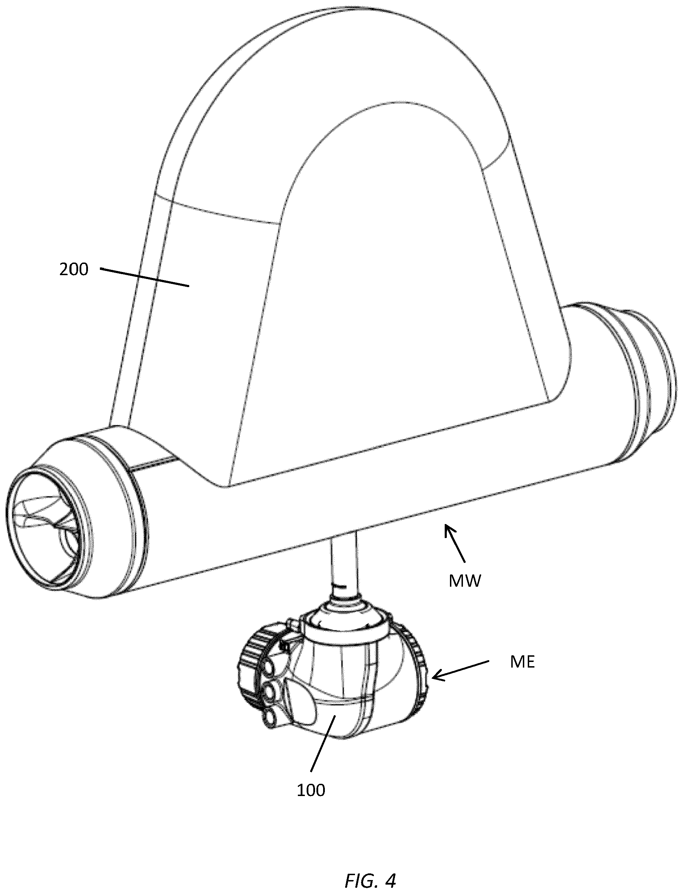

Zum Schutz der Rohre der Rohranordnung sowie weiterer daran angebrachter Komponenten des Meßwandlers - nicht zuletzt den vorbezeichneten Schwingungserregern 31, 32 bzw. Schwingungssensoren 41, 42, 43 44 - vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Fluid umfaßt der Meßwandler, wie auch bei Meßwandler der in Rede stehenden Art bzw. damit gebildeten Meßsystemen durchaus üblich, nach einer weiteren Ausgestaltung der Erfindung ein die Rohre 111, 121, 112, 122 der Rohranordnung umhüllendes Wandlergehäuse 200. Nämliches Wandlergehäuse 200 weist zumindest eine, beispielsweise auch hermetisch geschlossene, Kavität 200* auf, innerhalb der - wie auch aus einer Zusammenschau der Fig. 1, 2A, 2B, 3A und 3B bzw. 4, 2A, 5B, 6A und 6B ersichtlich - jedes der Rohre 111, 121, 112, 122 der Rohranordnung angeordnet ist. Das Wandlergehäuse kann beispielsweise eine Druckfestigkeit aufweisen, die größer als eine größte Druckfestigkeit der Rohre der Rohranordnung ist und/oder die mehr als 50 bar beträgt. Bei den in der Fig. 1, 2A, 2B, 3A, 3B, 4, 2A, 5B, 6A und 6B gezeigten Ausführungsbeispielen umfaßt das Wandlergehäuse 200 ein sich von einem ersten Ende bis zu einem zweiten Ende mit einer Tragelementlänge erstreckendes Tragelement 200-1, wobei das Tragelement 200-1 an dessen ersten Ende mit dem ersten Strömungsteiler und mit an dessen zweiten Ende mit dem zweiten Strömungsteiler mechanisch, beispielsweise stoffschlüssig, verbunden ist. Nämliches Tragelement 200-1 weist wenigstens einen von einer, beispielsweise metallischen, Wandung umhüllten, einen Teilbereich der vorbezeichneten Kavität 200* des Wandlergehäuses 200 bildenden Hohlraum 200*-1 auf und kann beispielsweise im wesentlichen zylindrisch, ggf. auch zumindest abschnittsweise hohlzylindrisch, bzw. röhrenförmig ausgebildet sein. Die Wandung des Tragelements 200-1 kann beispielsweise aus einem Stahl, beispielsweise nämlich einem Edelstahl oder einem Baustahl, und/oder aus dem gleichem Material wie die Wandung der Rohre 111, 121, 112, 122 bestehen. Das Tragelement kann u.a. dazu dienen, im Betrieb des Meßsystems via angeschlossener Prozeßleitung in den Meßwandler eingeleiteten mechanischen Kräften und/oder Momenten aufzunehmen, beispielsweise derart, daß von nämlichen Kräften und/oder Momenten keine oder nur sehr geringe, nämlich für die angestrebte Meßgenauigkeit des Meßsystems vernachlässigbare Anteile auf die innerhalb des Wandlergehäuses angeordnete Rohranordnung übertragen werden. Neben dem Tragelement weist das Wandlergehäuse 200 bei den hier gezeigten Ausführungsbeispielen ferner ein Hüllelement 200-2 auf, das mit dem Tragelement 200-1 des Wandlergehäuses mechanisch, beispielsweise nämlich stoffschlüssig, verbunden ist. Nämliches Hüllelement 200-2 kann, wie auch aus einer Zusammenschau der Fig. 1, 2A, 3A und 3B ersichtlich, beispielsweise röhrenförmig ausgebildet sein, derart das es einen von einer Wandung umhüllten, einen Teilbereich der vorbezeichneten Kavität 200* bildenden, beispielsweise teilweise kreiszylindrischen, Hohlraum 200*-2 aufweist. Alternativ dazu kann das Hüllelement 200-2, wie auch aus einer Zusammenschau der Fig. 4, 5A, 6A und 6B ersichtlich, beispielsweise auch kappenförmig ausgebildet sein, derart, daß eine Wandung des Hüllelements zusammen mit einem Segment der Wandung des Trägerelements den vorbezeichneten Hohlraum 200*-2 bilden bzw. umhüllen. Wie auch aus den Fign. 3A, 3B bzw. 6A, 6B ersichtlich sind das Wandlegehäuse und die Rohranordnugn ferner so ausgebildet, daß jedes der Rohre 111, 121, 112, 122 der Rohranordnung lediglich teilweise innerhalb des Hohlraums 200*-1 des Tragelements 200-1 bzw. jedes der Rohre 111, 121, 112, 122 lediglich teilweise innerhalb des Hohlraums 200*-2 des Hüllelements 200-2 angeordnet ist; dies - wie aus den Fign. 3A, 3B bzw. 6A, 6B ohne weiteres ersichtlich - beispielsweise auch derart, daß jedes der Teilsegmente 111-4, 121-4, 112-4, 122-4 der Rohre ausschließlich innerhalb des Hohlraums 200*-2 des Hüllelements 200-2 angeordnet ist und/oder daß jedes der Teilsegmente 111-3, 121-3, 112-3, 122-3, 111-5, 121-5, 112-5, 122-5 der Rohre zumindest überwiegend innerhalb des Hohlraums 200*-2 des Hüllelements 200-2 angeordnet ist und/oder daß jedes der Teilsegmente 111-2, 121-2, 112-2, 122-2, 111-6, 121-6, 112-6, 122-6 der Rohre zumindest überwiegend außerhalb des Hohlraums 200*-2 des Hüllelements 200-2 angeordnet ist bzw. daß umgekehrt jedes der zweiten Teilsegmente 111-2, 121-2, 112-2, 122-2, 111-6, 121-6, 112-6, 122-6 der Rohre zumindest überwiegend innerhalb des Hohlraums 200*-1 des Tragelements 200-1 angeordnet ist und/oder daß jedes der Teilsegmente111-3, 121-3, 112-3, 122-3, 111-5, 121-5, 112-5, 122-5 der Rohre zumindest überwiegend außerhalb des Hohlraums 200*-1 des Tragelements 200-1 angeordnet ist. Zum seitlichen Hindurchführen der Rohre 111, 121, 112, 122 durch das Tragelement 200-1 weist dessen Wandung nach einer weiteren Ausgestaltung der Erfindung eine erste Öffnung 200-1a sowie wenigstens eine von nämlicher Öffnung 200-1a entlang einer gedachten Mantellinie der Wandung beabstandete zweite Öffnung 200-1b auf. Wie aus den Fign. 3A, 3B bzw. 6A, 6B ohne weiteres ersichtlich, bildet jede der beiden Öffnungen 200-1a, 200-1b jeweils einen Teilbereich der vorbezeichneten Kavität 200* des Wandlergehäuses 200. Zudem erstreckt sich jedes der Rohre 111, 121, 112, 122 der Rohranordnung jeweils sowohl durch die Öffnung 200-1a als auch durch die Öffnung 200-1b. Zwecks der Vermeidung von für die Messung schädlichen Kontakten der vibrierenden Rohre untereinander oder mit dem des Wandlergehäuse weist jedes der Rohre 111, 121, 112, 122 lediglich solche Abstände zu den jeweils anderen Rohren wie auch zum Wandlergehäuse 200, nicht zuletzt auch zu einem jeweiligen Rand jeder der beiden vorbezeichneten Öffnungen 200-1a, 200-1b in der Wandung des Tragelements 200-1, auf, die jeweils unter allen Betriebsbedingungen freie Schwingungen mit für die Messung ausreichender Schwingungsamplitude ermöglichen. Nach einer Ausgestaltung der Erfindung weist daher jedes der Rohre 111, 121, 112, 122 der Rohranordnung jeweils einen kleinsten Abstand zum Wandlerghäuse 200 und/oder einen kleinsten Abstand zu jedem anderen der Rohre 111, 121, 112 bzw. 122 auf, der größer als 5 mm ist. Dementsprechend weist jedes der Rohre auch jeweils einen kleinsten Abstand zu einem Rand der Öffnung 200-1a bzw. jeweils einen kleinsten Abstand zu einem Rand der Öffnung 200-1b auf, der größer als 5 mm ist. Um anderseits auch einen möglichst kompakten Meßwandler bereitstellen zu können ist nach einer weiteren Ausgestaltung vorgesehen einen oder mehrere, ggf. auch jeden der vorbezeichneten kleinsten Abstände kleiner als 10 mm zu halten. Nach einer weiteren Ausgestaltung der Erfindung ist ferner vorgesehen, daß sowohl innerhalb der Öffnung 200-1a als auch innerhalb der Öffnung 200-1b, wie auch aus einer Zusammenschau der Fig. 3B und 6B ersichtlich, ein jeweiliger kleinster Abstand zwischen dem Rohr 111 und dem Rohr 112 jeweils kleiner ist als der vorbezeichnete kleinste Abstand zwischen dem Teilsegment 111-4 des Rohrs 111 und dem Teilsegment 112-4 des Rohrs 112 bzw. daß sowohl innerhalb der Öffnung 200-1a als auch innerhalb der Öffnung 200-1b ein jeweiliger kleinster Abstand zwischen dem Rohr 121 und dem Rohr 122 jeweils kleiner ist als der vorbezeichnete kleinste Abstand zwischen dem vierten Teilsegment 121-4 des Rohrs 121 und dem Teilsegment 122-4 des vierten Rohrs 122.

Zum Vergleichmäßigen der Strömungsprofile des entlang der mittels der vier - hier lediglich paarweise baugleichen - Rohre 111, 121, 112, 122 gebildeten Strömungspfade strömenden Fluids bzw. zur Erzielung einer - wie in Fig. 10 ("invention") exemplarisch gezeigt - über einen möglichst weiten Reynoldszahlbereich - nicht zuletzt auch im Vergleich zu ebenfalls in Fig. 10 exemplarische gezeigten Aufteilungen bei aus dem Stand der Technik bekannten Rohranordnungen ("prioir art") - möglichst gleichbleibenden Aufteilung der vorbezeichneten Teil-Massenströme auf die vier Rohre 111, 121, 112, 122 und damit einhergehend zur Erzielung einer innerhalb des Reynoldszahlbereichs möglichst gleichbleibend hohen Meßgenauigkeit sind beim erfindungsgemäßen Meßwandler im besonderen die - hier einlaßseitigen - kreisbogenförmigen zweiten Teilsegmente 111-2, 121-2, 112-2 und 122-2 sowie die - hier auslaßseitigen - kreisbogenförmigen sechsten Teilsegmente 111-6, 121-6, 112-6 und 122-6 sowohl formgleich als auch größengleich, derart, daß von jedem der zweiten Teilsegmente 111-2, 121-2, 112-2 und 122-2 sowohl dessen Segmentlänge als auch dessen Bogenradius sowie dessen Mittelpunktswinkel jeweils gleich groß ist wie die Segmentlänge, der Bogenradius bzw. der Mittelpunktswinkel jedes der anderen der zweiten Teilsegmente 111-2, 121-2, 112-2 bzw. 122-2 und daß von jedem der sechsten Teilsegmente 111-6, 121-6, 112-6 und 122-6 sowohl dessen Segmentlänge als auch dessen Bogenradius sowie dessen Mittelpunktswinkel jeweils gleich groß ist wie die Segmentlänge, der Bogenradius bzw. der Mittelpunktswinkel jedes der anderen der sechsten Teilsegmente 111-6, 121-6, 112-6 bzw. 122-6; dies insbesondere auch derart, daß Rohranordnung des erfindungsgemäßen Meßwandlers insgesamt genau acht baugleiche kreisbogenförmige Teilsegmente 111-2, 121-2, 112-2, 122-2, 111-6, 121-6, 112-6 und 122-6 aufweist. Nicht zuletzt zwecks Vereinfachung des Aufbaus des Meßwandlers bzw. zwecks Verringerung der Herstellungskosten ist nach einer weiteren Ausgestaltung der Erfindung von jedem der kreisbogenförmigen Teilsegmente 121-4, 122-4 der Rohre 121, 122 der jeweilige Bogenradius gleich dem Bogenradius jedes der kreisbogenförmigen Teilsegmente 111-2, 112-2, 121-2, 122-2, 111-6, 112-6, 121-6 und 122-6. Beispielsweise können die kreisbogenförmigen Teilsegmente auch so ausgebildet sein, daß von jedem der kreisbogenförmigen Teilsegmente 121-4, 122-4 der Rohre 121, 122 die Segmentlänge doppelt so groß ist wie die Segmentlänge jedes der Teilsegmente 111-2, 112-2, 121-2, 122-2, 111-6, 112-6, 121-6 und 122-6 und/oder daß von jedem der kreisbogenförmigen Teilsegmente 121-4, 122-4 der Rohre 121, 122 der Mittelpunktswinkel doppelt so groß ist wie der Mittelpunktswinkel jedes der Teilsegmente 111-2, 112-2, 121-2, 122-2, 111-6, 112-6, 121-6 und 122-6.

Um die mit der Rohrgeometrie der vorbezeichneten (acht) kreisbogenförmigen Teilsegmente 111-2, 121-2, 112-2, 122-2, 111-6, 121-6, 112-6 und 122-6 einhergehenden Längenunterschiede auf einfache - beispielsweise nämlich eine Verwendung konventioneller Strömungsteilern ermöglichenden bzw. gegenüber konventionellen Strömungsteilern keine baulichen Änderungen erfordernder - Weise wieder auszugleichen sind beim erfindungsgemäßen Meßwandler nach einer weiteren Ausgestaltung der Erfindung die ersten und siebten Teilsegmente 121-1, 122-1, 121-7 und 122-7 der dritten und vierten Rohre 121, 122 dementsprechend jeweils größer als die ersten und siebten Teilsegmente 112-1, 112-1, 112-7 und 112-7 der ersten und zweiten Rohre 111, 112, derart, daß von jedem Teilsegmente 121-1, 122-1, 121-7 und 122-7 dessen Segmentlänge jeweils größer ist als die Segmentlänge jedes der Teilsegmente 112-1, 112-1, 112-7 und 112-7; dies beispielsweise auch derart, daß von jedem der Teilsegmente 121-1, 122-1, 121-7, 122-7 die jeweilige Segmentlänge jeweils nicht weniger als 200% der Segmentlänge des Teilsegments 112-1, 112-1, 112-7 bzw. 112-7 und/oder nicht weniger als 100% des Kalibers des jeweiligen Rohrs 121 bzw. 122 beträgt und/oder daß von jedem der Teilsegmente 121-1, 122-1, 121-7, 122-7 die jeweilige Segmentlänge jeweils nicht mehr als 400% der Segmentlänge nämlicher Teilsegmente 112-1, 112-1, 112-7 bzw. 112-7 und/oder nicht mehr als 300% des Kalibers des jeweiligen Rohrs 121 bzw. 122 beträgt; dies beispielsweise auch für den vorbeschriebenen Fall, daß die Rohre 112, 122, mithin jene Rohre mit einem innerhalb der Symmetrieebene yz nominell am meisten beschränkten Platzangebot, eine Rohrlänge aufweisen, die größer als die Rohrlänge der Rohre 111, 121 ist. Nach einer weiteren Ausgestaltung der Erfindung ist ferner vorgesehen, daß von jedem der Teilsegmente 111-1, 111-7, 121-1, 121-7 die jeweilige Segmentlänge nicht weniger als 20% und/oder nicht mehr als 100% des Kalibers des Rohrs 111 bzw. 121 beträgt. Zwecks einer weiteren Vereinfachung des Aufbaus des Meßwandlers, nicht zuletzt auch, um auch bei möglichst kompakten Abmessungen eine möglichst hohe Meßempfindlichkeit auf die mittels des Meßwandlers zu erfassende Meßgröße zu erzielen, sind nach einer weiteren Ausgestaltung der Erfindung die Rohre 111, 112, 121, 122 so ausgebildet und angeordnet, daß - wie auch in Fig. 7A und 7B schematisch dargestellt - die Teilsegmente 111-1, 121-1, 112-1, 122-1 bzw. deren Längsachsen zueinander parallel verlaufen und daß die Teilsegmente 111-7, 121-7, 112-7, 122-7 bzw. deren Längsachsen zueinander parallel verlaufen. Alternativ oder in Ergänzung dazu können die Rohre ferner auch so ausgebildet und angeordnet sein, daß die Teilsegmente 111-3, 121-3, 112-3, 122-3 bzw. deren Längsachsen zueinander parallel verlaufen, und daß - wie auch in Fig. 7A und 7B schematisch dargestellt - die Teilsegmente 111-5, 121-5, 112-5, 122-5 bzw. deren Längsachsen zueinander parallel verlaufen.

## Patentansprüche

1. Meßwandler für ein dem Messen wenigstens einer Meßgröße, insb. ein Massenstrom und/oder eine Dichte und/oder eine Viskosität, eines strömenden Fluids dienlichen vibronisches Meßsystem, welcher Meßwandler umfaßt:
- eine Rohranordnung
-- mit einem gekrümmten, insb. zumindest abschnittsweise V-förmigen und/oder einstückigen, ersten Rohr (111),
-- mit einem dem ersten Rohr baugleichen gekrümmten zweiten Rohr (121),
-- mit einem gekrümmten, insb. zumindest abschnittsweise V-förmigen und/oder einstückigen, dritten Rohr (112),
-- mit einem lediglich dem dritten Rohr baugleichen gekrümmten vierten Rohr (122),
-- mit einem, insb. als Leitungsverzweigung dienlichen und/oder einlaßseitigen, ersten Strömungsteiler (21) mit, insb. genau, vier Strömungsöffnungen,
-- und mit einem, insb. dem ersten Strömungsteiler (21) baugleichen und/oder als Leitungsvereinigung dienlichen und/oder auslaßseitigen, zweiten Strömungsteiler (22) mit, insb. genau, vier Strömungsöffnungen;
- eine Erregeranordnung zum Anregen und Aufrechterhalten von mechanischen Schwingungen der Rohranordnung, nämlich von Biegeschwingungen jedes der ersten, zweiten, dritten und vierten Rohre um eine jeweilige Ruhelage;
- sowie eine Sensoranordnung zum Erfassen von mechanischen Schwingungen der Rohranordnung, nämlich von Biegeschwingungen jedes der ersten, zweiten, dritten und vierten Rohre um eine jeweilige Ruhelage, und zum Erzeugen von jeweils Schwingungsbewegungen eines oder mehrerer der ersten, zweiten, dritten und vierten Rohre repräsentierenden Schwingungsmeßsignalen;
- wobei jedes der ersten, zweiten, dritten und vierten Rohre sich jeweils von einem jeweiligen ersten Ende des jeweiligen Rohrs bis zu einem jeweiligen zweiten Ende nämlichen Rohrs jeweils mit einer einer gestreckten Länge (Bogenlänge) einer gedachten Mittellinie nämlichen Rohrs entsprechenden Rohrlänge erstreckt und jeweils eine, insb. metallischen, Rohrwandung sowie ein davon umschlossenes Lumen aufweist,
- und wobei von jedem der ersten und zweiten Rohre die jeweilige Rohrlänge jeweils größer ist als die Rohrlänge jedes der dritten und vierten Rohre;
- wobei jedes der ersten, zweiten, dritten und vierten Rohre jeweils an jeden der ersten und zweiten Strömungsteiler angeschlossen ist, derart, daß
-- das erste Rohr mit dessen ersten Ende in eine erste Strömungsöffnung des ersten Strömungsteilers (21) und mit dessen zweiten Ende in eine erste Strömungsöffnung des zweiten Strömungsteilers (22),
-- das zweite Rohr mit dessen ersten Ende in eine zweite Strömungsöffnung des ersten Strömungsteilers (21) und mit dessen zweiten Ende in eine zweite Strömungsöffnung des zweiten Strömungsteilers (22),
-- das dritte Rohr mit dessen ersten Ende in eine dritte Strömungsöffnung des ersten Strömungsteilers (21) und mit dessen zweiten Ende in eine dritte Strömungsöffnung des zweiten Strömungsteilers (22)
-- und das vierte Rohr mit dessen ersten Ende in eine vierte Strömungsöffnung des ersten Strömungsteilers (21) und mit dessen zweiten Ende in eine vierte Strömungsöffnung des zweiten Strömungsteilers (22) münden,
- und wobei jedes der ersten, zweiten, dritten und vierten Rohre jeweils wenigstens
-- ein mit dem ersten Strömungsteiler, insb. stoff- und/oder kraft- und/oder formschlüssig, verbundenes gerades, insb. hohlzylindrisches, erstes Teilsegment (111-1; 121-1; 112-1; 122-1),
-- ein an nämliches erstes Teilsegment anschließendes kreisbogenförmiges zweites Teilsegment (111-2; 121-2; 112-2; 122-2),
-- ein an nämliches zweites Teilsegment anschließendes kreiszylindrisches drittes Teilsegment (111-3; 121-3; 112-3; 122-3),
-- ein an nämliches drittes Teilsegment anschließendes kreisbogenförmiges viertes Teilsegment (111-4; 121-4; 112-4; 122-4),
-- ein an nämliches viertes Teilsegment anschließendes gerades, insb. hohlzylindrisches, zum jeweiligen dritten Teilsegment sowohl formgleiches als auch größengleiches fünftes Teilsegment (111-5; 121-5; 112-5; 122-5),
-- ein an nämliches fünftes Teilsegment anschließendes kreisbogenförmiges, zum jeweiligen zweiten Teilsegment sowohl formgleiches als auch größengleiches sechstes Teilsegment (111-6; 121-6; 112-6; 122-6)
-- sowie ein sowohl an nämliches sechstes Teilsegment anschließendes als auch mit dem zweiten Strömungsteiler, insb. stoff- und/oder kraft- und/oder formschlüssig, verbundenes gerades, insb. hohlzylindrisches, zum jeweiligen ersten Teilsegment sowohl formgleiches als auch größengleiches siebentes Teilsegment (111-7; 121-7; 112-7; 122-7) aufweist;
- wobei jedes der ersten, dritten, fünften und siebten Teilsegmente jeweils eine einer Länge einer jeweiligen gedachten Längsachse nämlichen Teilsegments entsprechende Segmentlänge und jedes der zweiten, vierten und sechsten Teilsegmente jeweils eine einer gestreckten Länge einer gedachten kreisbogenförmigen Mittellinie nämlichen Teilsegments entsprechende Segmentlänge, einen einem Radius nämlicher gedachter kreisbogenförmiger Mittellinie entsprechenden Bogenradius und einen einem Verhältnis nämlicher Segmentlänge zu nämlichem Bogenradius entsprechenden Mittelpunktswinkel aufweist;
- wobei die vierten Teilsegmente (111-4; 121-4) der ersten und zweiten Rohre jeweils größer sind als die vierten Teilsegmente (112-4; 122-4) der dritten und vierten Rohre, derart, daß von jedem der vierten Teilsegmente (111-4; 121-4) der ersten und zweiten Rohre dessen Segmentlänge jeweils größer ist als die Segmentlänge jedes der vierten Teilsegmente (112-4; 122-4) der dritten und vierten Rohre (112, 122),
- und wobei von jedem der vierten Teilsegmente (111-4; 121-4) der ersten und zweiten Rohre dessen Bogenradius jeweils größer ist als der Bogenradius jedes der vierten Teilsegmente (112-4; 122-4) der dritten und vierten Rohre,
**dadurch gekennzeichnet, dass** die zweiten Teilsegmente (111-2; 121-2; 112-2; 122-2) sowohl formgleich als auch größengleich sind, derart, daß von jedem der zweiten Teilsegmente (111-2; 121-2; 112-2; 122-2) sowohl dessen Segmentlänge als auch dessen Bogenradius sowie dessen Mittelpunktswinkel jeweils gleich groß ist wie die Segmentlänge, der Bogenradius bzw. der Mittelpunktswinkel jedes der anderen der zweiten Teilsegmente (111-2; 121-2; 112-2; 122-2),
und dass die sechsten Teilsegmente (111-6; 121-6; 112-6; 122-6) sowohl formgleich als auch größengleich sind, derart, daß von jedem der sechsten Teilsegmente (111-6; 121-6; 112-6; 122-6) sowohl dessen Segmentlänge als auch dessen Bogenradius sowie dessen Mittelpunktswinkel jeweils gleich groß ist wie die Segmentlänge, der Bogenradius bzw. der Mittelpunktswinkel jedes der anderen der sechsten Teilsegmente (111-6; 121-6; 112-6; 122-6).

2. Meßwandler nach dem vorherigen Anspruch,
- wobei von jedem der ersten und zweiten Rohre die jeweilige Rohrlänge jeweils mehr als 101% der Rohrlänge des dritten bzw. vierten Rohres und/oder jeweils weniger als 105% der Rohrlänge des dritten bzw. vierten Rohres beträgt; und/oder
- wobei die jedes der ersten dritten, fünften und siebten Teilsegmente jeweils hohlzylindrisch ist; und/oder
- wobei von jedem der ersten und siebten Teilsegmente der dritten und vierten Rohre die jeweilige Segmentlänge jeweils größer ist als die Segmentlänge von jedem der ersten und siebten Teilsegmente der ersten und zweiten Rohre, insb. nämlich jeweils nicht weniger als 200% der Segmentlänge der ersten und siebten Teilsegmente der ersten und zweiten Rohre und/oder jeweils nicht mehr als 400% der Segmentlänge der ersten und siebten Teilsegmente der ersten und zweiten Rohre beträgt.

3. Meßwandler nach einem der vorherigen Ansprüche, wobei die ersten, zweiten, dritten und vierten Rohre so ausgebildet und angeordnet sind,
- daß die ersten Teilsegmente (111-1; 121-1; 112-1; 122-1) bzw. deren Längsachsen zueinander parallel verlaufen,
- und daß die siebten Teilsegmente (111-7; 121-7; 112-7; 122-7) bzw. deren Längsachsen zueinander parallel verlaufen.

4. Meßwandler nach einem der vorherigen Ansprüche, wobei die ersten, zweiten, dritten und vierten Rohre so ausgebildet und angeordnet sind,
- daß die dritten Teilsegmente (111-3; 121-3; 112-3; 122-3) bzw. deren Längsachsen zueinander parallel verlaufen,
- und daß die fünften Teilsegmente (111-5; 121-5; 112-5; 122-5) bzw. deren Längsachsen zueinander parallel verlaufen.

5. Meßwandler nach einem der vorherigen Ansprüche,
- wobei die ersten und siebten Teilsegmente (111-1; 112-1; 112-7; 112-7) der ersten und zweiten Rohre sowohl formgleich als auch größengleich sind; und
- wobei die ersten und siebten Teilsegmente (121-1; 122-1; 121-7; 122-7) der dritten und vierten Rohre sowohl formgleich als auch größengleich sind.

6. Meßwandler nach einem der vorherigen Ansprüche, wobei die ersten und siebten Teilsegmente (121-1; 122-1; 121-7; 122-7) der dritten und vierten Rohre (121, 122) jeweils größer sind als die ersten und siebten Teilsegmente (112-1; 112-1; 112-7; 112-7) der ersten und zweiten Rohre (111, 112), derart, daß von jedem der ersten und siebten
Teilsegmente (121-1; 122-1; 121-7; 122-7) der dritten und vierten Rohre (121, 122) dessen Segmentlänge jeweils größer ist als die Segmentlänge jedes der ersten und siebten Teilsegmente (112-1; 112-1; 112-7; 112-7) der ersten und zweiten Rohre (111, 112).

7. Meßwandler nach einem der vorherigen Ansprüche, wobei jedes der ersten, zweiten, dritten und vierten Rohre jeweils ein einem größten Innendurchmesser nämlichen Rohrs entsprechendes, insb. nicht weniger als 20 mm betragendes, Kaliber aufweist.

8. Meßwandler nach dem vorherigen Anspruch
- wobei von jedem der ersten, zweiten, dritten und vierten Rohre das Kaliber jeweils gleich groß ist wie das Kaliber jedes anderen der ersten, zweiten, dritten bzw. vierten Rohre; und/oder
- wobei von jedem der ersten, zweiten, dritten und vierten Rohre das Kaliber jeweils mehr als 40 mm beträgt; und/oder
- wobei von jedem der ersten und siebten Teilsegmente der ersten und zweiten Rohre die jeweilige Segmentlänge nicht weniger als 20% des Kalibers des jeweiligen ersten bzw. zweiten Rohrs beträgt; und/oder
- wobei von jedem der ersten und siebten Teilsegmente der dritten und vierten Rohre die jeweilige Segmentlänge nicht weniger als 100% des Kalibers des jeweiligen dritten bzw. vierten Rohrs beträgt; und/oder
- wobei von jedem der ersten und siebten Teilsegmente der ersten und zweiten Rohre die jeweilige Segmentlänge jeweils nicht mehr als 100% des Kalibers des jeweiligen ersten bzw. zweiten Rohrs beträgt; und/oder
- wobei von jedem der ersten und siebten Teilsegmente der vierten und dritten Rohre die jeweilige Segmentlänge jeweils nicht mehr als 300% des Kalibers des jeweiligen dritten bzw. vierten Rohrs beträgt; und/oder
- wobei von jedem der zweiten, dritten, vierten, fünften und sechsten Teilsegmente die jeweilige Segmentlänge jeweils nicht weniger als 150% des Kalibers des jeweiligen ersten, zweiten, dritten bzw. vierten Rohrs beträgt; und/oder
- wobei von jedem der zweiten, vierten, fünften und sechsten Teilsegmente der jeweilige Bogenradius jeweils nicht weniger als 150% des Kalibers des jeweiligen ersten, zweiten, dritten bzw. vierten Rohrs beträgt; und/oder
- wobei jedes der ersten, zweiten, dritten und vierten Rohre (111, 121, 112, 122) jeweils ein Rohrlänge-zu Kaliber-Verhältnis, gemessen als ein Quotient der jeweiligen Rohrlänge zum jeweiligen Kaliber, aufweist, das größer als 25 (25:1), insb. nämlich kleiner als 30 (30:1) ist; und/oder
- wobei die jedes der ersten, dritten, fünften und siebten Teilsegmente jeweils ein über deren jeweilige Segmentlänge gleich (konstant) bleibendes Kaliber aufweist.

9. Meßwandler nach einem der vorherigen Ansprüche,
- wobei von jedem der vierten Teilsegmente der ersten und zweiten Rohre der jeweilige Bogenradius nicht weniger als 130% des Bogenradius der vierten Teilsegmente der dritten und vierten Rohre beträgt; und/oder
- wobei von jedem der zweiten, vierten und sechsten Teilsegmente der jeweilige Bogenradius jeweils nicht weniger als 50 mm beträgt; und/oder
- wobei von jedem der vierten Teilsegmente der dritten und vierten Rohre der jeweilige Bogenradius gleich dem Bogenradius jedes der zweiten bzw. sechsten Teilsegmente ist; und/oder
- wobei von jedem der vierten Teilsegmente der ersten und zweiten Rohre die jeweilige Segmentlänge nicht weniger als 130% der Segmentlänge der vierten Teilsegmente der dritten und vierten Rohre beträgt; und/oder
- wobei von jedem der vierten Teilsegmente (111-4; 121-4; 112-4; 122-4) der Mittelpunktswinkel jeweils gleichgroß ist wie der Mittelpunktswinkel jedes der anderen vierten Teilsegmente; und/oder
- wobei von jedem der vierten Teilsegmente (111-4; 121-4; 112-4; 122-4) der Mittelpunktswinkel jeweils größer ist als der Mittelpunktswinkel jedes der zweiten und sechsten Teilsegmente, insb. nämlich derart, daß von jedem der vierten Teilsegmente (111-4; 121-4; 112-4; 122-4) der Mittelpunktswinkel jeweils doppelt so groß wie der Mittelpunktswinkel jedes der zweiten und sechsten Teilsegmente ist; und/oder
- wobei von jedem der vierten Teilsegmente (111-4; 121-4) der ersten und zweiten Rohre dessen Bogenradius jeweils 200% des Bogenradius jedes der vierten Teilsegmente (112-4; 122-4) der dritten und vierten Rohre beträgt; und/oder
- wobei von jedem der vierten Teilsegmente (111-4; 121-4) der ersten und zweiten Rohre dessen Segmentlänge jeweils mehr als 130% und/oder weniger als 200% der Segmentlänge jedes der vierten Teilsegmente (112-4; 122-4) der dritten und vierten Rohre (112, 122) beträgt; und/oder
- wobei jedes der ersten, zweiten, dritten und vierten Rohre jeweils eine erste Symmetrieebene sowie eine dazu senkrechte zweite Symmetrieebene aufweist, und wobei jedes der ersten, zweiten, dritten und vierten Rohre jeweils sowohl zur zugehörigen ersten Symmetrieebene als auch zur zugehörigen zweiten Symmetrieebene spiegelsymmetrisch ist; und/oder
- wobei sowohl eine kleinste Wandstärke der Rohrwandung des ersten Rohrs als auch eine kleinste Wandstärke der Rohrwandung des zweiten Rohrs jeweils gleich einer kleinsten Wandstärke der Rohrwandung des dritten Rohrs sowie jeweils gleich einer kleinsten Wandstärke der Rohrwandung des vierten Rohrs ist; und/oder
- wobei die Rohrwandung jedes der ersten, zweiten, dritten und vierten Rohre aus gleichem Material, insb. nämlich jeweils einem Edelstahl oder einer Nickelbasislegierung, besteht; und/oder
- wobei jedes der ersten, zweiten, dritten und vierten Rohre sowohl mit dem ersten Strömungsteiler als auch mit dem zweiten Strömungsteiler jeweils stoffschlüssig verbunden sind; und/oder
- wobei die Rohranordnung genau vier Rohre, mithin außer den ersten, zweiten, dritten und vierten Rohren kein weiteres an den ersten Strömungsteiler und den zweiten Strömungsteiler angeschlossenes Rohr aufweist.

10. Meßwandler nach einem der vorherigen Ansprüche, wobei die ersten, zweiten, dritten und vierten Rohre so ausgebildet und angeordnet sind, daß die Rohranordnung eine sowohl zwischen dem ersten und zweiten Rohr als auch zwischen dem dritten und vierten Rohr verortete erste Symmetrieebene, nämlich eine gedachte Bezugsebene, bezüglich der die Rohranordnung spiegelsymmetrisch ist, aufweist.

11. Meßwandler nach dem vorherigen Anspruch,
- wobei die ersten, zweiten, dritten und vierten Rohre so ausgebildet und angeordnet sind, daß die vierten Teilsegmente (111-4, 121-4, 112-4, 122-4) bzw. die gedachten kreisbogenförmigen Mittellinien der vierten Teilsegmente (111-4, 121-4, 112-4, 122-4) in Projektion auf die erste Symmetrieebene (yz) der Rohranordnung zueinander parallel verlaufen; und/oder
- wobei das erste Rohr zur ersten Symmetrieebene der Rohranordnung einen kleinsten Abstand aufweist, der gleich einem kleinsten Abstand ist, den das dritte Rohr zur ersten gedachten Symmetrieebene der Rohranordnung aufweist; und/oder
- wobei das zweite Rohr zur ersten Symmetrieebene der Rohranordnung einen kleinsten Abstand aufweist, der gleich einem kleinsten Abstand ist, den das vierte Rohr zur ersten gedachten Symmetrieebene der Rohranordnung aufweist; und/oder
- wobei jedes der ersten, zweiten, dritten und vierten Rohre zur ersten Symmetrieebene der Rohranordnung parallel ist; und/oder
- wobei die Rohranordnung eine zur ersten Symmetrieebene der Rohranordnung senkrechte, gleichwohl jedes der ersten, zweiten, dritten und vierten Rohre, insb. nämlich deren jeweiliges viertes Teilsegment, imaginär schneidende zweite Symmetrieebene der Rohranordnung aufweist und bezüglich nämlicher zweiten Symmetrieebene der Rohranordnung spiegelsymmetrisch ist.

12. Meßwandler nach einem der vorherigen Ansprüche, wobei die Rohranordnung
- eine erste gedachte Verbindungsachse, die einen Mittelpunkt der ersten Strömungsöffnung des ersten Strömungsteilers und einen Mittelpunkt der ersten Strömungsöffnung des zweiten Strömungsteilers imaginär miteinander verbindet,
- eine zweite gedachte Verbindungsachse, die einen Mittelpunkt der zweiten Strömungsöffnung des ersten Strömungsteilers und einen Mittelpunkt der zweiten Strömungsöffnung des zweiten Strömungsteilers imaginär miteinander verbindet,
- eine dritte gedachte Verbindungsachse, die einen Mittelpunkt der dritten Strömungsöffnung des ersten Strömungsteilers und einen Mittelpunkt der dritten Strömungsöffnung des zweiten Strömungsteilers imaginär miteinander verbindet
- sowie eine vierte gedachte Verbindungsachse, die einen Mittelpunkt der vierten Strömungsöffnung des ersten Strömungsteilers und einen Mittelpunkt der vierten Strömungsöffnung des zweiten Strömungsteilers imaginär miteinander verbindet, aufweist; insb. derart, daß jede gedachten Verbindungsachsen jeweils parallel zu jeder anderen nämlicher Verbindungsachsen verläuft.

13. Meßwandler nach dem vorherigen Anspruch,
- wobei jedes der Rohre jeweils eine Rohrbogenhöhe, gemessen als ein (größter) Abstand eines Scheitelpunktes des jeweiligen vierten Teilsegments zur zugehörigen, nämlich das jeweilige erste und zweite Ende des jeweiligen Rohres imaginär verbindenden gedachten Verbindungsachse, aufweist, welche Rohrbogenhöhe so gewählt ist, daß jedes der Rohre jeweils ein Rohrlänge-zu-Rohrbogenhöhe-Verhältnis, gemessen als ein Quotient der Rohrlänge des jeweiligen Rohrs zur jeweiligen Rohrbogenhöhe, aufweist, das größer als 2 (2:1), insb. nämlich größer als 2,5 (2,5:1), und kleiner als 5 (5:1), insb. nämlich kleiner als 3 (3:1), ist, und/oder daß jedes der Rohre jeweils ein Kaliber-zu-Rohrbogenhöhe-Verhältnis, gemessen als ein Quotient des Kalibers des jeweiligen Rohrs zur jeweiligen Rohrbogenhöhe, aufweist, das größer als 0,1, insb. nämlich kleiner als 0,2 ist; und/oder
- wobei die ersten, zweiten, dritten und vierten Rohre so ausgebildet und angeordnet sind, daß jedes der ersten Teilsegmente (111-1; 121-1; 112-1; 122-1) jeweils mit der zugehörigen, nämlich das jeweilige erste und zweite Ende des jeweiligen Rohres imaginär verbindenden gedachten Verbindungsachse fluchtet, insb. derart, daß die gedachte Längsachse jedes der ersten Teilsegmente (111-1; 121-1; 112-1; 122-1) jeweils mit der zugehörigen gedachten Verbindungsachse koinzidiert; und/oder
- wobei die ersten, zweiten, dritten und vierten Rohre so ausgebildet und angeordnet sind, daß jedes der siebten Teilsegmente (111-7; 121-7; 112-7; 122-7) jeweils mit der zugehörigen, nämlich das jeweilige erste und zweite Ende des jeweiligen Rohres imaginär verbindenden gedachten Verbindungsachse fluchtet, insb. derart, daß die gedachte Längsachse jedes der siebten Teilsegmente (111-7; 121-7; 112-7; 122-7) jeweils mit der zugehörigen gedachten Verbindungsachse koinzidiert; und/oder
- wobei jedes der ersten, zweiten, dritten und vierten Rohre jeweils dafür eingerichtet ist, in dessen jeweiligen Lumen Fluid zu führen, insb. nämlich ausgehend von dessen jeweiligen ersten Ende in Richtung von dessen jeweiligen zweiten Ende von Fluid durchströmt zu werden, und währenddessen vibrieren gelassen zu werden.

14. Meßwandler nach einem der vorherigen Ansprüche,
- wobei die Erregeranordnung einen, insb. elektrodynamischen, ersten Schwingungserreger sowie wenigstens einen, insb. elektrodynamischen und/oder zum ersten Schwingungserreger baugleichen, zweiten Schwingungserreger aufweist;
- und wobei die Sensoranordnung einen - insb. elektrodynamischen - ersten Schwingungssensor, einen - insb. elektrodynamischen und/oder zum ersten Schwingungssensor baugleichen - zweiten Schwingungssensor, einen - insb. elektrodynamischen und/oder zum ersten Schwingungssensor baugleichen - dritten Schwingungssensor sowie wenigstens einen - insb. elektrodynamischen und/oder zum dritten Schwingungssensor baugleichen - vierten Schwingungssensor aufweist.

15. Meßwandler gemäß dem vorherigen Anspruch,
- wobei der erste Schwingungserreger sowohl vom dritten Teilsegment des ersten Rohrs als auch vom fünften Teilsegment des ersten Rohrs beabstandet am vierten Teilsegment des ersten Rohrs sowie sowohl vom dritten Teilsegment des zweiten Rohrs als auch vom fünften Teilsegment des zweiten Rohrs beabstandet am vierten Teilsegment des zweiten Rohrs angebracht ist;
- und wobei der zweite Schwingungserreger sowohl vom dritten Teilsegment des dritten Rohrs als auch vom fünften Teilsegment des dritten Rohrs beabstandet am vierten Teilsegment des dritten Rohrs sowie sowohl vom dritten Teilsegment des vierten Rohrs als auch vom fünften Teilsegment des vierten Rohrs beabstandet am vierten Teilsegment des vierten Rohrs angebracht ist;
- wobei der erste Schwingungssensor sowohl vom zweiten Teilsegment des ersten Rohrs als auch vom vierten Teilsegment des ersten Rohrs beabstandet am dritten Teilsegment des ersten Rohrs sowie sowohl vom zweiten Teilsegment des zweiten Rohrs als auch vom vierten Teilsegment des zweiten Rohrs beabstandet am dritten Teilsegment des zweiten Rohrs angebracht ist;
- wobei der zweite Schwingungssensor sowohl vom sechsten Teilsegment des ersten Rohrs als auch vom vierten Teilsegment des ersten Rohrs beabstandet am fünften Teilsegment des ersten Rohrs sowie sowohl vom sechsten Teilsegment des zweiten Rohrs als auch vom vierten Teilsegment der zweiten Rohrs beabstandet am fünften Teilsegment des zweiten Rohrs angebracht ist;
- wobei der dritte Schwingungssensor sowohl vom zweiten Teilsegment des dritten Rohrs als auch vom vierten Teilsegment des dritten Rohrs beabstandet am dritten Teilsegment des dritten Rohrs sowie sowohl vom zweiten Teilsegment des vierten Rohrs als auch vom vierten Teilsegment des vierten Rohrs beabstandet am dritten Teilsegment des vierten Rohrs angebracht ist;
- und wobei der vierte Schwingungssensor sowohl vom sechsten Teilsegment des dritten Rohrs als auch vom vierten Teilsegment des dritten Rohrs beabstandet am fünften Teilsegment des dritten Rohrs sowie sowohl vom sechsten Teilsegment des vierten Rohrs als auch vom vierten Teilsegment des vierten Rohrs beabstandet am fünften Teilsegment des vierten Rohrs angebracht ist.

16. Meßwandler nach einem der vorherigen Ansprüche,
- wobei der erste Strömungsteiler einen, insb. dem Anschluß der Rohranordnung an ein das Fluid (FL1) zuführendes Leitungssegment einer Prozeßleitung dienlichen, ersten Anschlußflansch aufweist;
- und wobei der zweite Strömungsteiler einen, insb. dem Anschluß der Rohranordnung an ein das Fluid (FL1) wieder abführendes Leitungssegment einer Prozeßleitung dienlichen, zweiten Anschlußflansch aufweist.

17. Meßwandler gemäß dem vorherigen Anspruch, wobei jeder der ersten und zweiten Anschlußflansche jeweils eine Dichtfläche zum fluiddichten bzw. leckagefreien Verbinden der Rohranordnung mit einem jeweils korrespondierenden Leitungssegment einer Prozeßleitung aufweist.

18. Meßwandler gemäß dem vorherigen Anspruch,
- wobei jede Dichtfläche jedes der ersten und zweiten Anschlußflansche jeweils einen, insb. mehr als 100 mm betragenden und/oder eine Nennweite des Meßwandlers definierenden, kleinsten Durchmesser aufweist; und/oder
- wobei ein kleinster Abstand zwischen den Dichtflächen der ersten und zweiten Anschlußflansche eine, insb. mehr als 1000 mm betragende und/oder weniger als 3000 mm betragende, Einbaulänge der Rohranordnung bzw. des damit gebildeten Meßwandlers definiert.

19. Meßwandler nach einem der vorherigen Ansprüche, weiters umfassend: ein die ersten, zweiten, dritten und vierten Rohre umhüllendes, insb. eine Druckfestigkeit von mehr als 50 bar aufweisendes, Wandlergehäuse (200), wobei das Wandlergehäuse zumindest eine, insb. hermetisch geschlossene, Kavität (200*) aufweist und wobei jedes der ersten, zweiten, dritten und vierten Rohre innerhalb nämlicher Kavität angeordnet ist.

20. Meßwandler gemäß dem vorherigen Anspruch, wobei das Wandlergehäuse ein sich von einem ersten Ende bis zu einem zweiten Ende mit einer Tragelementlänge erstreckendes Tragelement (200-1) sowie ein Hüllelement (200-2) aufweist;
- wobei das Tragelement (200-1) an dessen ersten Ende mit dem ersten Strömungsteiler und an dessen zweiten Ende mit dem zweiten Strömungsteiler mechanisch, insb. stoffschlüssig, verbunden ist;
- wobei das Hüllelement (200-2) mit dem Tragelement (200-1) des Wandlergehäuses mechanisch, insb. stoffschlüssig, verbunden ist;
- und wobei das Tragelement (200-1) wenigstens einen von einer, insb. metallischen, Wandung umhüllten, einen Teilbereich der Kavität (200*) des Wandlergehäuses (200) bildenden Hohlraum (200*-1) aufweist.

21. Meßwandler gemäß dem vorherigen Anspruch,
- wobei das Tragelement (200-1) im wesentlichen zylindrisch, insb. zumindest abschnittsweise hohlzylindrisch, bzw. röhrenförmig ausgebildet ist; und/oder
- wobei das Hüllelement (200-2) röhrenförmig ausgebildet ist, derart, daß das Hüllelement (200-2) einen von einer Wandung umhüllten, einen Teilbereich der Kavität (200*) bildenden, insb. teilweise kreiszylindrischen, Hohlraum (200*-2) aufweist.

22. Vibronisches Meßsystem zum Messen und/oder Überwachen wenigstens eines, insb. zeitlich veränderlichen, Strömungsparameters, insb. einer Massendurchflußrate, einer Volumendurchflußrate und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Fluids, insb. eines Gases, einer Flüssigkeit oder einer Dispersion, welches Meßsystem umfaßt:
- einen Meßwandler (MW) gemäß einem der vorherigen Ansprüche;
- sowie eine sowohl mit dessen Erregeranordnung (30) als auch mit dessen Sensoranordnung (40), insb. mittels elektrischer Verbindungsleitungen, elektrisch gekoppelte, insb. mittels wenigstens eines Mikroprozessors und/oder mittels wenigstens eines digitalen Signalprozessors gebildete, Meß- und Betriebselektronik (ME);
- wobei die Meß- und Betriebselektronik eingerichtet ist, den Meßwandler speisende und/oder steuernde Erregersignale (e31, e32) zu generieren; und/oder
- wobei die Meß- und Betriebselektronik eingerichtet ist, mittels des Meßwandlers (MW) generierte Schwingungssignale (s41, s42, s43, s44) zu empfangen und zu verarbeiten, insb. nämlich einen eine Massendurchflußrate, m, des Fluids repräsentierenden Massendurchfluß-Meßwert, und/oder einen den wenigstens einen Stoffparameter repräsentierenden Stoffparameterwert, insb. einen eine Dichte des Fluids repräsentierenden Dichte-Meßwert und/oder einen eine Viskosität des Fluids repräsentierenden Viskosität-Meßwert zu ermitteln.

23. Verwendung eines Meßwandlers nach einem der Ansprüche 1 bis 21 oder eines Meßsystems nach Anspruch 22 zum Messen und/oder Überwachen eines in einer, insb. eine Nennweite von mehr als 100 mm aufweisenden, Rohrleitung strömenden Fluids, insb. einer mit einer Massendurchflußrate von mehr als 800 t/h strömenden Flüssigkeit.

## Claims

1. A transducer for a vibronic measurement system serving to measure at least one measurement variable, in particular a mass flow and/or a density and/or a viscosity, of a flowing fluid, which transducer comprises:
- a tube arrangement
-- with a curved, in particular at least partially V-shaped and/or single-piece, first tube (111),
-- with a curved second tube (121) which is structurally identical to the first tube,
-- with a curved, in particular at least partially V-shaped and/or single-piece, third tube (112),
-- with a curved fourth tube (122) which is merely structurally identical to the third tube,
-- with a first flow divider (21) which serves in particular as a line branching and/or is on the inlet side, with, in particular precisely, four flow openings,
-- and with a second flow divider (22), which is in particular structurally identical to the first flow divider (21) and/or serves as a line unification and/or is on the outlet side, with, in particular precisely, four flow openings;
- an exciter assembly for causing and maintaining mechanical vibrations of the tube arrangement, that is to say bending vibrations of each of the first, second, third and fourth tubes about a respective rest position;
- and a sensor assembly for detecting mechanical vibrations of the tube arrangement, that is to say bending vibrations of each of the first, second, third and fourth tubes about a respective rest position, and for generating respective vibrational movements of one or more vibration measurement signals representing the first, second, third and fourth tubes;
- each of the first, second, third and fourth tubes extending respectively from a respective first end of the respective tube to a respective second end of said tube in each case with a tube length corresponding to a stretched length (arc length) of an imaginary center line of said tube and in each case having an, in particular metallic, tube wall and a lumen surrounded thereby,
- and the respective tube length of each of the first and second tubes being respectively greater than the tube length of each of the third and fourth tubes;
- each of the first, second, third and fourth tubes being in each case connected to each of the first and second flow dividers, such that
-- the first tube opens with its first end into a first flow opening of the first flow divider (21) and with its second end into a first flow opening of the second flow divider (22),
-- the second tube opens with its first end into a second flow opening of the first flow divider (21) and with its second end into a second flow opening of the second flow divider (22),
-- the third tube opens with its first end into a third flow opening of the first flow divider (21) and with its second end into a third flow opening of the second flow divider (22),
-- and the fourth tube opens with its first end into a fourth flow opening of the first flow divider (21) and with its second end into a fourth flow opening of the second flow divider (22),
- and each of the first, second, third and fourth tubes in each case having at least
-- one straight, in particular hollow cylindrical, first partial segment (111-1; 121-1; 112-1; 122-1) connected, in particular in a firmly bonded and/or force-fitted and/or positively locking manner, to the first flow divider,
-- one second arcuate partial segment (111-2; 121-2; 112-2; 122-2) joined to said first partial segment,
-- a circular cylindrical third partial segment (111-3; 121-3; 112-3; 122-3) joined to said second partial segment,
-- an arcuate fourth partial segment (111-4; 121-4; 112-4; 122-4) joined to said third partial segment,
-- a straight, in particular hollow cylindrical, fifth partial segment (111-5; 121-5; 112-5; 122-5) which is both the same shape and the same size as the respective third partial segment and is connected to said fourth partial segment,
-- an arcuate sixth partial segment (111-6; 121-6; 112-6; 122-6) that is both the same shape and the same size as the respective second partial segment that is to joined to said fifth partial segment,
-- and a straight, in particular hollow cylindrical, seventh partial segment (111-7; 121-7; 112-7; 122-7) which is joined both to said sixth partial segment and connected to the second flow divider, in particular in a firmly bonded and/or force-fitted and/or positively locking manner, and is both the same shape and the same size as the respective first partial segment;
- each of the first, third, fifth and seventh partial segments in each case having a segment length corresponding to a length of a respective imaginary longitudinal axis of said partial segment and each of the second, fourth and sixth partial segments in each case having a segment length corresponding to a stretched length of an imaginary arcuate center line of said partial segment, an arc radius corresponding to a radius of said imaginary arcuate center line and a center point angle corresponding to a ratio of said segment length to said arc radius;
- the fourth partial segments (111-4; 121-4) of the first and second tubes being in each case larger than the fourth partial segments (112-4; 122-4) of the third and fourth tubes, such that the segment lengths of each of the fourth partial segments (111-4; 121-4) of the first and second tubes are in each case larger than the segment lengths of each of the fourth partial segments (112-4; 122-4) of the third and fourth tubes (112, 122),
- and the arc radiuses of each of the fourth partial segments (111-4; 121-4) of the first and second tubes are in each case greater than the arc radiuses of each of the fourth partial segments (112-4; 122-4) of the third and fourth tubes,
wherein the second partial segments (111-2; 121-2; 112-2; 122-2) are both the same shape and
the same size such that both the segment lengths and the arc radiuses and the center point angles of each of the second partial segments (111-2; 121-2; 112-2; 122-2) are in each case the same size as the segment lengths, the arc radiuses and the center point angles of each of the other second partial segments (111-2; 121-2; 112-2; 122-2),
and wherein the sixth partial segments (111-6; 121-6; 112-6; 122-6) are both the same shape and the same size such that both the segment lengths and the arc radiuses and the center point angles of each of the sixth partial segments (111-6; 121-6; 112-6; 122-6) are in each case the same size as the segment lengths, the arc radiuses and the center point angles of each of the other sixth partial segments (111-6; 121-6; 112-6; 122-6),

2. The transducer as claimed in the preceding claim,
- the respective tube lengths of each of the first and second tubes being in each case more than 101% of the tube lengths of the third and fourth tubes and/or in each case less than 105% of the tube lengths of the third and fourth tubes; and/or
- each of the first, third, fifth and seventh partial segments being in each case hollow cylindrical; and/or
- the respective segment lengths of each of the first and seventh partial segments of the third and fourth tubes being in each case greater than the segment lengths of each of the first and seventh partial segments of the first and second tubes, that is to say in particular in each case no less than 200% of the segment lengths of the first and seventh partial segments of the first and second tubes and/or in each case no more than 400% of the segment lengths of the first and seventh partial segments of the first and second tubes.

3. The transducer as claimed in one of the preceding claims, the first, second, third and fourth tubes being configured and arranged so that
- the first partial segments (111-1; 121-1; 112-1; 122-1) and their longitudinal axes run parallel to one another,
- and the seventh partial segments (111-7; 121-7; 112-7; 122-7) and their longitudinal axes run parallel to one another.

4. The transducer as claimed in one of the preceding claims, the first, second, third and fourth tubes being configured and arranged so that
- the third partial segments (111-3; 121-3; 112-3; 122-3) and their longitudinal axes run parallel to one another,
- and the fifth partial segments (111-5; 121-5; 112-5; 122-5) and their longitudinal axes run parallel to one another.

5. The transducer as claimed in one of the preceding claims,
- the first and seventh partial segments (111-1; 112-1; 112-7; 112-7) of the first and second tubes being both the same shape and the same size; and
- the first and seventh partial segments (121-1; 122-1; 121-7; 122-7) of the third and fourth tubes being both the same shape and the same size.

6. The transducer as claimed in one of the preceding claims, the first and seventh partial segments (121-1; 122-1; 121-7; 122-7) of the third and fourth tubes (121, 122) being in each case larger than the first and seventh partial segments (112-1; 112-1; 112-7; 112-7) of the first and second tubes (111, 112), such that the segment lengths of each of the first and seventh partial segments (121-1; 122-1; 121-7; 122-7) of the third and fourth tubes (121, 122) are in each case greater than the segment lengths of each of the first and seventh partial segments (112-1; 112-1; 112-7; 112-7) of the first and second tubes (111, 112).

7. The transducer as claimed in one of the preceding claims, each of the first, second, third and fourth tubes having in each case a caliber that corresponds to a largest internal diameter of said tube and being in particular no less than 20 mm.

8. The transducer as claimed in the preceding claim,
- the calibers of each of the first, second, third and fourth tubes being in each case the same size as the calibers of each of the other first, second, third and fourth tubes; and/or
- the calibers of each of the first, second, third and fourth tubes being in each case more than 40 mm; and/or
- the respective segment lengths of each of the first and seventh partial segments of the first and second tubes being no less than 20% of the calibers of the respective first and second tubes; and/or
- the respective segment lengths of each of the first and seventh partial segments of the third and fourth tubes being no less than 100% of the calibers of the respective third and fourth tubes; and/or
- the respective segment lengths of each of the first and seventh partial segments of the first and second tubes being in each case no more than 100% of the calibers of the respective first and second tubes; and/or
- the respective segment lengths of each of the first and seventh partial segments of the fourth and third tubes being in each case no more than 300% of the calibers of the respective third and fourth tubes; and/or
- the respective segment lengths of each of the second, third, fourth, fifth and sixth partial segments being in each case no less than 150% of the calibers of the respective first, second, third and fourth tubes; and/or
- the respective arc radiuses of each of the second, fourth, fifth and sixth partial segments being in each case no less than 150% of the calibers of the respective first, second, third and fourth tubes; and/or
- each of the first, second, third and fourth tubes (111, 121, 112, 122) having in each case a tube length-to-caliber ratio, measured as a quotient of the respective tube length to the respective caliber, which is greater than 25 (25:1), that is to say in particular less than 30 (30:1); and/or
- each of the first, third, fifth and seventh partial segments having in each case a caliber that is the same (constant) over their respective segment length.

9. The transducer as claimed in one of the preceding claims,
- the respective arc radiuses of each of the fourth partial segments of the first and second tubes being no less than 130% of the arc radius of the fourth partial segments of the third and fourth tubes; and/or
- the respective arc radiuses of each of the second, fourth and sixth partial segments being in each case no less than 50 mm; and/or
- the respective arc radiuses of each of the fourth partial segments of the third and fourth tubes being the same as the arc radiuses of each of the second and sixth partial segments; and/or
- the respective segment lengths of each of the fourth partial segments of the first and second tubes being no less than 130% of the segment lengths of the fourth partial segments of the third and fourth tubes; and/or
- the center point angles of each of the fourth partial segments (111-4; 121-4; 112-4; 122-4) being in each case the same size as the center point angles of each of the other fourth partial segments; and/or
- the center point angles of each of the fourth partial segments (111-4; 121-4; 112-4; 122-4) being in each case greater than the center point angles of each of the second and sixth partial segments, that is to say in particular such that the center point angles of each of the fourth partial segments (111-4; 121-4; 112-4; 122-4) are in each case twice the size as the center point angles of each of the second and sixth partial segments; and/or
- the arc radiuses of each of the fourth partial segments (111-4; 121-4) of the first and second tubes being in each case 200% of the arc radiuses of each of the fourth partial segments (112-4; 122-4) of the third and fourth tubes; and/or
- the segment lengths of each of the fourth partial segments (111-4; 121-4) of the first and second tubes being in each case more than 130% and/or less than 200% of the segment lengths of each of the fourth partial segments (112-4; 122-4) of the third and fourth tubes (112, 122); and/or
- each of the first, second, third and fourth tubes having in each case a first plane of symmetry and second plane of symmetry perpendicular thereto, and each of the first, second, third and fourth tubes being in each case mirror symmetrical both to the associated first plane of symmetry and to the associated second plane of symmetry; and/or
- both a smallest wall thickness of the tube wall of the first tube and a smallest wall thickness of the tube wall of the second tube being in each case equal to a smallest wall thickness of the tube wall of the third tube and in each case equal to a smallest wall thickness of the tube wall of the fourth tube; and/or
- the tube walls of each of the first, second, third and fourth tubes being made from the same material, that is to say in particular in each case a stainless steel or a nickel-base alloy; and/or
- each of the first, second, third and fourth tubes being connected both to the first flow divider and to the second flow divider in each case in a firmly bonded manner; and/or
- the tube arrangement having precisely four tubes, hence having no further tube joined to the first flow divider and the second flow divider apart from the first, second, third and fourth tubes.

10. The transducer as claimed in one of the preceding claims, the first, second, third and fourth tubes being configured and arranged so that the tube arrangement has a first plane of symmetry located both between the first and second tubes and between the third and fourth tubes, that is to say an imaginary reference plane, with respect to which the tube arrangement is mirror symmetrical.

11. The transducer as claimed in the preceding claim,
- the first, second, third and fourth tubes being configured and arranged so that the fourth partial segments (111-4, 121-4, 112-4, 122-4) and the imaginary arcuate center lines of the fourth partial segments (111-4, 121-4, 112-4, 122-4) run parallel to one another in projection onto the first plane of symmetry (yz) of the tube arrangement; and/or
- the first tube having a smallest spacing to the first plane of symmetry of the tube arrangement which is the same as a smallest spacing which the third tube has to the first imaginary plane of symmetry of the tube arrangement; and/or
- the second tube having a smallest spacing to the first plane of symmetry of the tube arrangement which is the same as a smallest spacing which the fourth tube has to the first imaginary plane of symmetry of the tube arrangement; and/or
- each of the first, second, third and fourth tubes being parallel to the first plane of symmetry of the tube arrangement; and/or
- the tube arrangement having a second plane of symmetry of the tube arrangement which is perpendicular to the first plane of symmetry of the tube arrangement, but nevertheless imaginarily cutting each of the first, second, third and fourth tubes, that is to say in particular the respective fourth partial segment thereof, and is mirror symmetrical to said second plane of symmetry of the tube arrangement.

12. The transducer as claimed in one of the preceding claims, the tube arrangement
- having a first imaginary connecting axis which connects a center point of the first flow opening of the first flow divider and a center point of the first flow opening of the second flow divider imaginarily to one another,
- having a second imaginary connecting axis which connects a center point of the second flow opening of the first flow divider and a center point of the second flow opening of the second flow divider imaginarily to one another,
- having a third imaginary connecting axis which connects a center point of the third flow opening of the first flow divider and a center point of the third flow opening of the second flow divider imaginarily to one another,
- and having a fourth imaginary connecting axis which connects a center point of the fourth flow opening of the first flow divider and a center point of the fourth flow opening of the second flow divider imaginarily to one another; in particular such that each imaginary connecting axis runs in each case parallel to each of the other said connecting axes.

13. The transducer as claimed in the preceding claim,
- each of the tubes having in each case a tube arc height, measured as a (largest) distance of an apex of the respective fourth partial segment to the associated imaginary connecting axis, that is to say imaginarily connecting the respective first and second ends of the respective tube, which tube arc height is selected so that each of the tubes has in each case a tube length-to-tube arc height ratio, measured as a quotient of the tube length of the respective tube to the respective tube arc height, which is greater than 2 (2:1), that is to say in particular greater than 2.5 (2.5: 1), and less than 5 (5:1), that is to say in particular less than 3 (3:1), and/or that each of the tubes has in each case a caliber-to-tube arc height ratio, measured as a quotient of the caliber of the respective tube to the respective tube arc height, which is greater than 0.1, that is to say in particular less than 0.2; and/or
- the first, second, third and fourth tubes being configured and arranged so that each of the first partial segments (111-1; 121-1; 112-1; 122-1) is in each case aligned with the associated imaginary connecting axis, that is to say imaginarily connecting the respective first and second end of the respective tube, in particular such that the imaginary longitudinal axis of each of the first partial segments (111-1; 121-1; 112-1; 122-1) coincides in each case with the associated imaginary connecting axis; and/or
- the first, second, third and fourth tubes being configured and arranged so that each of the seventh partial segments (111-7; 121-7; 112-7; 122-7) is in each case aligned with the associated imaginary connecting axis, that is to say imaginarily connecting the respective first and second end of the respective tube, in particular such that the imaginary longitudinal axis of each of the seventh partial segments (111-7; 121-7; 112-7; 122-7) coincides in each case with the associated imaginary connecting axis; and/or
- each of the first, second, third and fourth tubes being in each case designed to guide fluid in its respective lumen, that is to say in particular to be flowed through by fluid starting from its respective first end in the direction of its respective second end, and to be vibrated during the process.

14. The transducer as claimed in one of the preceding claims,
- the exciter assembly having an, in particular electrodynamic, first vibration exciter and at least one second vibration exciter which is in particular electrodynamic and/or structurally identical to the first vibration exciter;
- and the sensor assembly having an - in particular electrodynamic - first vibration sensor, a second vibration sensor - which is in particular electrodynamic and/or structurally identical to the first vibration sensor -, a third vibration sensor - which is in particular electrodynamic and/or structurally identical to the first vibration sensor - and at least one fourth vibration sensor - which is in particular electrodynamic and/or structurally identical to the third vibration sensor.

15. The transducer as claimed in the preceding claim,
- the first vibration exciter being joined to the fourth partial segment of the first tube spaced apart both from the third partial segment of the first tube and from the fifth partial segment of the first tube and joined to the fourth partial segment of the second tube spaced apart both from the third partial segment of the second tube and from the fifth partial segment of the second tube;
- and the second vibration exciter being joined to the fourth partial segment of the third tube spaced apart both from the third partial segment of the third tube and from the fifth partial segment of the third tube and joined to the fourth partial segment of the fourth tube spaced apart both from the third partial segment of the fourth tube and from the fifth partial segment of the fourth tube;
- the first vibration exciter being joined to the third partial segment of the first tube spaced apart both from the second partial segment of the first tube and from the fourth partial segment of the first tube and joined to the third partial segment of the second tube spaced apart both from the second partial segment of the second tube and from the fourth partial segment of the second tube;
- the second vibration exciter being joined to the fifth partial segment of the first tube spaced apart both from the sixth partial segment of the first tube and from the fourth partial segment of the first tube and joined to the fifth partial segment of the second tube spaced apart both from the sixth partial segment of the second tube and from the fourth partial segment of the second tube;
- the third vibration exciter being joined to the third partial segment of the third tube spaced apart both from the second partial segment of the third tube and from the fourth partial segment of the third tube and joined to the third partial segment of the fourth tube spaced apart both from the second partial segment of the fourth tube and from the fourth partial segment of the fourth tube;
- and the fourth vibration exciter being joined to the fifth partial segment of the third tube spaced apart both from the sixth partial segment of the third tube and from the fourth partial segment of the third tube and joined to the fifth partial segment of the fourth tube spaced apart both from the sixth partial segment of the fourth tube and from the fourth partial segment of the fourth tube.

16. The transducer as claimed in one of the preceding claims,
- the first flow divider having a first connecting flange serving in particular to join the tube arrangement to a line segment of a process line supplying the fluid (FL1);
- and the second flow divider having a second connecting flange serving in particular to join the tube arrangement to a line segment of a process line taking the fluid (FL1) away again.

17. The transducer as claimed in the preceding claim, each of the first and second connecting flanges in each case having a sealing surface for the fluid-tight and leak-free connection of the tube arrangement to an in each case corresponding line segment of a process line.

18. The transducer as claimed in the preceding claim,
- each sealing surface of each of the first and second connecting flanges having in each case a smallest diameter which is in particular more than 100 mm and/or defines a nominal width of the transducer; and/or
- a smallest distance between the sealing surfaces of the first and second connecting flanges defining an installation length of the tube arrangement which is in particular more than 1000 mm and/or less than 3000 mm or of the transducer formed thereby.

19. The transducer as claimed in one of the preceding claims, further comprising: a transducer housing (200) which surrounds the first, second, third and fourth tubes and has in particular a compressive strength of more than 50 bar, the transducer housing having at least one, in particular hermetically sealed, cavity (200*) and each of the first, second, third and fourth tubes being arranged inside said cavity.

20. The transducer as claimed in the preceding claim, the transducer housing having a carrying element (200-1) extending from a first end to a second end with a carrying element length, and a surrounding element (200-2);
- the carrying element (200-1) being mechanically connected at its first end to the first flow divider and at its second end to the second flow divider, in particular in a firmly bonded manner;
- the surrounding element (200-2) being mechanically connected to the carrying element (200-1) of the transducer housing, in particular in a firmly bonded manner;
- and the carrying element (200-1) having at least one hollow space (200*-1) surrounded by an, in particular metallic, wall and forming a sub-area of the cavity (200*) of the transducer housing (200).

21. The transducer as claimed in the preceding claim,
- the carrying element (200-1) being configured to be essentially cylindrical, in particular at least partially hollow cylindrical, or tubular; and/or
- the surrounding element (200-2) being configured to be tubular such that the surrounding element (200-2) has an in particular partially circular cylindrical hollow space (200*-2) surrounded by a wall and forming a sub-area of the cavity (200*).

22. A vibronic measurement system for measuring and/or monitoring at least one, in particular temporarily variable, flow parameter, in particular a mass flow rate, a volume flow rate and/or a flow speed and/or for measuring and/or monitoring at least one, in particular temporarily variable, substance parameter, in particular a density and/or a viscosity, of a flowing fluid, in particular of a gas, a liquid or a dispersion, which measurement system comprises:
- a transducer (MW) as claimed in one of the preceding claims;
- and measuring and operating electronics (ME) electrically coupled both to its exciter assembly (30) and to its sensor assembly (40), in particular by means of electrical connection lines, in particular by means of at least one microprocessor and/or by means of at least one digital signal processor;
- the measuring and operating electronics being designed to generate exciter signals (e31, e32) feeding and/or controlling the transducer; and/or
- the measuring and operating electronics being designed to receive and process vibration signals (s41, s42, s43, s44) generated by means of the transducer (MW), that is to say in particular to ascertain a mass flow measurement value representing a mass flow rate, m, of the fluid, and/or a substance parameter value representing the at least one substance parameter, in particular a density measurement value representing a density of the fluid and/or a viscosity measurement value representing a viscosity of the fluid.

23. The use of a transducer as claimed in one of claims 1 to 21 or of a measurement system as claimed in claim 22 for measuring and/or monitoring a fluid flowing in a tube line having in particular a nominal width of more than 100 mm in particular a liquid flowing at a mass flow rate of more than 800 t/h.

## Revendications

1. Transducteur destiné à un système de mesure vibronique servant à mesurer au moins une grandeur de mesure, notamment un débit massique et/ou une densité et/ou une viscosité, d'un fluide en écoulement, lequel transducteur comprend :
- un arrangement de tubes
-- avec un premier tube (111) courbé, notamment en forme de V au moins par sections et/ou d'une seule pièce,
-- avec un deuxième tube (121) courbé, de construction identique à celle du premier tube,
-- avec un troisième tube (112) courbé, notamment en forme de V au moins par sections et/ou d'une seule pièce,
-- avec un quatrième tube (122) courbé, de construction identique uniquement à celle du troisième tube,
-- avec un premier diviseur de débit (21), servant notamment de dérivation de conduite et/ou situé côté entrée, lequel diviseur de débit comprend notamment exactement quatre ouvertures d'écoulement,
-- et avec un deuxième diviseur de débit (22), notamment de construction identique au premier diviseur de débit (21) et/ou servant de jonction de conduites, et/ou situé côté sortie, lequel diviseur de débit comprend notamment exactement quatre ouvertures d'écoulement ;
- un dispositif d'excitation destiné à l'excitation et au maintien des vibrations mécaniques de l'arrangement de tubes, à savoir des vibrations de flexion de chacun parmi le premier, le deuxième, le troisième et le quatrième tube autour d'une position de repos respective ;
- ainsi qu'un arrangement de capteurs destiné à la détection des vibrations mécaniques de l'arrangement de tubes, à savoir des vibrations de flexion de chacun parmi le premier, le deuxième, le troisième et le quatrième tube autour d'une position de repos respective, et destiné à générer des signaux de mesure de vibrations représentant respectivement des mouvements de vibration d'un ou de plusieurs parmi le premier, le deuxième, le troisième et le quatrième tube ;
- chacun parmi le premier, le deuxième, le troisième et le quatrième tube s'étendant respectivement d'une première extrémité respective du tube respectif jusqu'à une deuxième extrémité respective du même tube, avec une longueur de tube correspondant à une longueur étirée (longueur d'arc) d'une ligne médiane imaginaire du même tube et présentant respectivement une paroi de tube, notamment métallique, ainsi qu'un canal intérieur entouré par la dite paroi de tube,
- et la longueur de tube respective de chacun parmi le premier et le deuxième tube étant respectivement supérieure à la longueur de tube de chacun parmi le troisième et le quatrième tube ;
- chacun parmi le premier, le deuxième, le troisième et le quatrième tube étant raccordé respectivement à chacun parmi le premier et le deuxième diviseur de débit de telle sorte que
-- le premier tube débouche par sa première extrémité dans une première ouverture d'écoulement du premier diviseur de débit (21) et par sa deuxième extrémité dans une première ouverture d'écoulement du deuxième diviseur de débit (22),
-- le deuxième tube débouche par sa première extrémité dans une deuxième ouverture d'écoulement du premier diviseur de débit (21) et par sa deuxième extrémité dans une deuxième ouverture d'écoulement du deuxième diviseur de débit (22),
-- le troisième tube débouche par sa première extrémité dans une troisième ouverture d'écoulement du premier diviseur de débit (21) et par sa deuxième extrémité dans une troisième ouverture d'écoulement du deuxième diviseur de débit (22)
-- et le quatrième tube débouche par sa première extrémité dans une quatrième ouverture d'écoulement du premier diviseur de débit (21) et par sa deuxième extrémité dans une quatrième ouverture d'écoulement du deuxième diviseur de débit (22),
- et pour lequel chacun parmi le premier, le deuxième, le troisième et le quatrième tube comporte respectivement au moins
-- un premier segment partiel (111-1 ; 121-1 ; 112-1 ; 122-1) droit, notamment cylindrique creux, relié au premier diviseur de débit, notamment par liaison de matière et/ou de force et/ou de forme,
-- un deuxième segment partiel (111-2 ; 121-2 ; 112-2 ; 122-2) en forme d'arc de cercle, adjacent au premier segment partiel,
-- un troisième segment partiel (111-3 ; 121-3 ; 112-3 ; 122-3) cylindrique circulaire adjacent au deuxième segment partiel,
-- un quatrième segment partiel (111-4 ; 121-4 ; 112-4 ; 122-4) en forme d'arc de cercle adjacent au troisième segment partiel,
-- un cinquième segment partiel (111-5 ; 121-5 ; 112-5 ; 122-5) droit, notamment cylindrique creux, de forme et de taille identiques au troisième segment partiel respectif, adjacent au quatrième segment partiel ;
-- un sixième segment partiel (111-6 ; 121-6 ; 112-6 ; 122-6) en forme d'arc de cercle, de forme et de taille identiques au deuxième segment partiel respectif, adjacent au cinquième segment partiel ;
-- ainsi qu'un septième segment partiel (111-7 ; 121-7 ; 112-7 ; 122-7) droit, notamment cylindrique creux, notamment de forme et de taille identiques au premier segment partiel respectif, adjacent au sixième segment partiel et relié au deuxième diviseur de débit, notamment par liaison de matière et/ou de force et/ou de forme ;
- chacun des premiers, troisièmes, cinquièmes et septièmes segments partiels présentant une longueur de segment correspondant à une longueur d'un axe longitudinal imaginaire respectif dudit segment partiel, et chacun parmi les deuxièmes, quatrièmes et sixièmes segments partiels présentant une longueur de segment correspondant à une longueur étirée d'une ligne centrale imaginaire en arc de cercle dudit segment partiel, un rayon d'arc correspondant à un rayon de ladite ligne centrale imaginaire en arc de cercle, et un angle au centre correspondant à un rapport de ladite longueur de segment audit rayon d'arc ;
- les quatrièmes segments partiels (111-4 ; 121-4) des premiers et deuxièmes tubes étant respectivement plus grands que les quatrièmes segments partiels (112-4 ; 122-4) des troisièmes et quatrièmes tubes, de telle sorte que, pour chacun des quatrièmes segments partiels (111-4 ; 121-4) des premiers et deuxièmes tubes, sa longueur de segment est respectivement plus grande que la longueur de segment de chacun des quatrièmes segments partiels (112-4 ; 122-4) des troisièmes et quatrièmes tubes (112, 122),
- et de telle sorte que, pour chacun des quatrièmes segments partiels (111-4 ; 121-4) des premiers et deuxièmes tubes, son rayon d'arc est respectivement supérieur au rayon d'arc de chacun des quatrièmes segments partiels (112-4 ; 122-4) des troisièmes et quatrièmes tubes,
**caractérisé**
**en ce que** les deuxièmes segments partiels (111-2 ; 121-2 ; 112-2 ; 122-2) sont à la fois de forme et de taille identiques, de telle sorte que, pour chacun des deuxièmes segments partiels (111-2 ; 121-2 ; 112-2 ; 122-2), à la fois sa longueur de segment, son rayon d'arc et son angle au centre sont respectivement égaux à la longueur de segment, au rayon d'arc et à l'angle au centre de chacun des autres parmi les deuxièmes segments partiels (111-2 ; 121-2 ; 112-2 ; 122-2),
et **en ce que** les sixièmes segments partiels (111-6 ; 121-6 ; 112-6 ; 122-6) sont à la fois de forme et de taille identiques, de telle sorte que, pour chacun des sixièmes segments partiels (111-6 ; 121-6 ; 112-6 ; 122-6), à la fois sa longueur de segment et son rayon d'arc ainsi que son angle au centre sont respectivement égaux à la longueur de segment, au rayon d'arc et à l'angle au centre de chacun des autres parmi les sixièmes segments partiels (111-6 ; 121-6 ; 112-6 ; 122-6).

2. Transducteur selon la revendication précédente,
- pour lequel la longueur de chacun parmi le premier et le deuxième tube est supérieure à 101 % de la longueur de chacun parmi le troisième et le quatrième tube et/ou inférieure à 105 % de la longueur de chacun parmi le troisième et le quatrième tube ; et/ou
- pour lequel chacun des premiers, troisièmes, cinquièmes et septièmes segments partiels est respectivement cylindrique creux ; et/ou
- pour lequel chacun des premiers et septièmes segments partiels des troisièmes et quatrièmes tubes présente une longueur de segment respective supérieure à la longueur de segment de chacun des premiers et septièmes segments partiels des premiers et deuxièmes tubes, notamment pas moins de 200 % de la longueur de segment des premiers et septièmes segments partiels des premiers et deuxièmes tubes et/ou pas plus de 400 % de la longueur de segment des premiers et septièmes segments partiels des premiers et deuxièmes tubes.

3. Transducteur selon l'une des revendications précédentes, pour lequel le premier, le deuxième, le troisième et le quatrième tube sont réalisés et disposés
- de telle sorte que les premiers segments partiels (111-1 ; 121-1 ; 112-1 ; 122-1) ou leurs axes longitudinaux sont parallèles entre eux,
- et de telle sorte que les septièmes segments partiels (111-7 ; 121-7 ; 112-7 ; 122-7) ou leurs axes longitudinaux sont parallèles entre eux.

4. Transducteur selon l'une des revendications précédentes, pour lequel le premier, deuxième, le troisième et le quatrième tube sont conçus et disposés
- de telle sorte que les troisièmes segments partiels (111-3 ; 121-3 ; 112-3 ; 122-3) ou leurs axes longitudinaux sont parallèles entre eux,
- et de telle sorte que les cinquièmes segments partiels (111-5 ; 121-5 ; 112-5 ; 122-5) ou leurs axes longitudinaux sont parallèles entre eux.

5. Transducteur selon l'une des revendications précédentes,
- pour lequel les premiers et septièmes segments partiels (111-1 ; 112-1 ; 112-7 ; 112-7) du premier et du deuxième tube sont à la fois de forme et de taille identiques ; et
- les premiers et septièmes segments partiels (121-1 ; 122-1 ; 121-7 ; 122-7) du troisième et du quatrième tube sont à la fois de forme et de taille identiques.

6. Transducteur selon l'une des revendications précédentes, pour lequel les premiers et septièmes segments partiels (121-1 ; 122-1 ; 121-7 ; 122-7) du troisième et du quatrième tube (121, 122) sont respectivement plus grands que les premiers et septièmes segments partiels (112-1 ; 112-1 ; 112-7 ; 112-7) du premier et du deuxième tube (111, 112), de telle sorte que pour chacun des premiers et septièmes segments partiels (121-1 ; 122-1 ; 121-7 ; 122-7) du troisième et du quatrième tube (121, 122), sa longueur de segment est respectivement supérieure à la longueur de segment de chacun des premiers et septièmes segments partiels (112-1 ; 112-1 ; 112-7 ; 112-7) du premier et du deuxième tube (111, 112).

7. Transducteur selon l'une des revendications précédentes, pour lequel chacun parmi le premier, le deuxième, le troisième et le quatrième tube présente un calibre correspondant au plus grand diamètre intérieur du même tube, notamment non inférieur à 20 mm.

8. Transducteur selon la revendication précédente,
- pour lequel le calibre de chacun parmi le premier, le deuxième, le troisième et le quatrième tube est respectivement égal au calibre de chacun des autres parmi le premier, le deuxième, le troisième et le quatrième tube ; et/ou
- pour lequel le calibre de chacun parmi le premier, le deuxième, le troisième et le quatrième tube est respectivement supérieur à 40 mm ; et/ou
- pour lequel, de chacun des premiers et septièmes segments partiels du premier et du deuxième tube, la longueur de segment respective n'est pas inférieure à 20 % du calibre du premier et du deuxième tube respectifs ; et/ou
- pour lequel, de chacun des premiers et septièmes segments partiels du troisième et du quatrième tube, la longueur de segment respective n'est pas inférieure à 100 % du calibre du troisième et du quatrième tube respectif ; et/ou
- pour lequel, de chacun des premiers et septièmes segments partiels du premier et du deuxième tube, la longueur de segment respective n'est pas supérieure à 100 % du calibre du premier et du deuxième tube respectif ; et/ou
- pour lequel chacun des premiers et septièmes segments partiels du quatrième et du troisième tube présente une longueur de segment respective qui n'est pas supérieure à 300 % du calibre du troisième ou du quatrième tube respectif ; et/ou
- pour lequel la longueur de segment respective de chacun des deuxièmes, troisièmes, quatrièmes, cinquièmes et sixièmes segments partiels n'est pas inférieure à 150 % du calibre du premier, du deuxième, du troisième et du quatrième tube respectif ; et/ou
- pour lequel le rayon d'arc respectif de chacun des deuxièmes, quatrièmes, cinquièmes et sixièmes segments partiels n'est pas inférieur à 150 % du calibre du premier, du deuxième, du troisième et du quatrième tube respectif ; et/ou
- pour lequel chacun parmi le premier, le deuxième, le troisième et le quatrième tube (111, 121, 112, 122) présente un rapport longueur de tube/calibre, mesuré comme un quotient de la longueur de tube respective par le calibre respectif, qui est supérieur à 25 (25:1), notamment inférieur à 30 (30:1) ; et/ou
- pour lequel chacun des premiers, troisièmes, cinquièmes et septièmes segments partiels présente un calibre qui reste égal (constant) sur sa longueur de segment respective.

9. Transducteur selon l'une des revendications précédentes,
- pour lequel le rayon d'arc respectif de chacun des quatrièmes segments partiels du premier et du deuxième tube n'est pas inférieur à 130 % du rayon d'arc des quatrièmes segments partiels du troisième et du quatrième tube ; et/ou
- pour lequel le rayon d'arc respectif de chacun des deuxièmes, quatrièmes et sixièmes segments partiels n'est pas inférieur à 50 mm ; et/ou
- pour lequel le rayon d'arc respectif de chacun des quatrièmes segments partiels du troisième et du quatrième tube est égal au rayon d'arc de chacun des deuxièmes et sixièmes segments partiels, respectivement ; et/ou
- pour lequel la longueur de segment respective de chacun des quatrièmes segments partiels du premier et du deuxième tube n'est pas inférieure à 130 % de la longueur de segment des quatrièmes segments partiels du troisième et du quatrième tube ; et/ou
- l'angle au centre de chacun des quatrièmes segments partiels (111-4 ; 121-4 ; 112-4 ; 122-4) étant respectivement égal à l'angle au centre de chacun des autres quatrièmes segments partiels ; et/ou
- l'angle au centre de chacun des quatrièmes segments partiels (111-4 ; 121-4 ; 112-4 ; 122-4) étant respectivement plus grand que l'angle au centre de chacun des deuxièmes et sixièmes segments partiels, notamment de telle sorte que l'angle au centre de chacun des quatrièmes segments partiels (111-4 ; 121-4 ; 112-4 ; 122-4) est respectivement deux fois plus grand que l'angle au centre de chacun des deuxièmes et sixièmes segments partiels ; et/ou
- chacun des quatrièmes segments partiels (111-4 ; 121-4) du premier et du deuxième tube présentant un rayon d'arc qui représente respectivement 200 % du rayon d'arc de chacun des quatrièmes segments partiels (112-4 ; 122-4) du troisième et du quatrième tube ; et/ou
- chacun des quatrièmes segments partiels (111-4 ; 121-4) du premier et du deuxième tube présentant une longueur de segment qui représente respectivement plus de 130 % et/ou moins de 200 % de la longueur de segment de chacun des quatrièmes segments partiels (112-4 ; 122-4) du troisième et du quatrième tube (112, 122) ; et/ou
- chacun parmi le premier, le deuxième, le troisième et le quatrième tube présentant respectivement un premier plan de symétrie ainsi qu'un deuxième plan de symétrie perpendiculaire à celui-ci, et chacun parmi le premier, le deuxième, le troisième et le quatrième tube présentant une symétrie spéculaire à la fois par rapport au premier plan de symétrie associé et au deuxième plan de symétrie associé ; et/ou
- à la fois une épaisseur de paroi minimale de la paroi de tube du premier tube et une épaisseur de paroi minimale de la paroi de tube du deuxième tube étant respectivement égales à une épaisseur de paroi minimale de la paroi de tube du troisième tube et respectivement égales à une épaisseur de paroi minimale de la paroi de tube du quatrième tube ; et/ou
- la paroi de chacun parmi le premier, le deuxième, le troisième et le quatrième tube étant constituée du même matériau, notamment d'un acier inoxydable ou d'un alliage à base de nickel ; et/ou
- chacun parmi le premier, le deuxième, le troisième et le quatrième tube étant relié par liaison de matière aussi bien au premier diviseur de débit qu'au deuxième diviseur de débit ; et/ou
- l'arrangement de tubes comportant exactement quatre tubes, c'est-à-dire qu'en dehors du premier, du deuxième, du troisième et du quatrième tube, il n'y a pas d'autre tube raccordé au premier diviseur de débit et au deuxième diviseur de débit.

10. Transducteur selon l'une des revendications précédentes, pour lequel le premier, le deuxième, le troisième et le quatrième tube sont conçus et disposés de telle sorte que l'arrangement de tubes présente un premier plan de symétrie situé à la fois entre le premier et le deuxième tube et entre le troisième et le quatrième tube, à savoir un plan de référence imaginaire par rapport auquel l'arrangement de tubes présente une symétrie spéculaire.

11. Transducteur selon la revendication précédente,
- pour lequel le premier, le deuxième, le troisième et le quatrième tube sont conçus et disposés de telle sorte que les quatrièmes segments partiels (111-4, 121-4, 112-4, 122-4) ou les lignes centrales imaginaires en arc de cercle des quatrièmes segments partiels (111-4, 121-4, 112-4, 122-4) sont parallèles les uns aux autres en projection sur le premier plan de symétrie (yz) de l'arrangement de tubes ; et/ou
- pour lequel le premier tube présente, par rapport au premier plan de symétrie de l'arrangement de tubes, une distance minimale qui est égale à une distance minimale que présente le troisième tube par rapport au premier plan de symétrie imaginaire de l'arrangement de tubes ; et/ou
- pour lequel le deuxième tube présente, par rapport au premier plan de symétrie de l'arrangement de tubes, une distance minimale qui est égale à une distance minimale que présente le quatrième tube par rapport au premier plan de symétrie imaginaire de l'arrangement de tubes ; et/ou
- pour lequel chacun parmi le premier, le deuxième, le troisième et le quatrième tube est parallèle au premier plan de symétrie de l'arrangement de tubes ; et/ou
- l'arrangement de tubes présentant un deuxième plan de symétrie de l'arrangement de tubes perpendiculaire au premier plan de symétrie de l'arrangement de tubes, lequel deuxième plan coupe néanmoins de manière imaginaire chacun parmi le premier, le deuxième, le troisième et le quatrième tube, notamment à savoir son quatrième segment partiel respectif, et présentant une symétrie spéculaire par rapport au deuxième plan de symétrie de l'arrangement de tubes.

12. Transducteur selon l'une des revendications précédentes, pour lequel l'arrangement de tubes présente
- un premier axe de liaison imaginaire, lequel relie de manière imaginaire un centre de la première ouverture d'écoulement du premier diviseur de débit et un centre de la première ouverture d'écoulement du deuxième diviseur de débit,
- un deuxième axe de liaison imaginaire, lequel relie de manière imaginaire un centre de la deuxième ouverture d'écoulement du premier diviseur de débit et un centre de la deuxième ouverture d'écoulement du deuxième diviseur de débit,
- un troisième axe de liaison imaginaire, lequel relie de manière imaginaire un centre de la troisième ouverture d'écoulement du premier diviseur de débit et un centre de la troisième ouverture d'écoulement du deuxième diviseur de débit,
- ainsi qu'un quatrième axe de liaison imaginaire, lequel relie de manière imaginaire un centre de la quatrième ouverture d'écoulement du premier diviseur de débit et un centre de la quatrième ouverture d'écoulement du deuxième diviseur de débit ; notamment de telle sorte que chaque axe de liaison imaginaire s'étend respectivement parallèlement à chacun des autres axes de liaison.

13. Transducteur selon la revendication précédente,
- pour lequel chacun des tubes présente une hauteur de coude de tube respective, mesurée en tant que distance (maximale) d'un sommet du quatrième segment partiel respectif par rapport à l'axe de liaison imaginaire associé, à savoir reliant de manière imaginaire la première et la deuxième extrémité respective du tube respectif,
laquelle hauteur de coude de tube est choisie de telle sorte que chacun des tubes présente respectivement un rapport longueur de tube/hauteur de coude de tube, mesuré comme un quotient de la longueur de tube respective par la hauteur de coude de tube respective, lequel quotient est supérieur à 2 (2:1), notamment supérieur à 2,5 (2,5:1), et inférieur à 5 (5:1), notamment inférieur à 3 (3:1), et/ou de telle sorte que chacun des tubes présente respectivement un rapport calibre/hauteur de coude de tube, mesuré comme un quotient du calibre de tube respectif par la hauteur de coude de tube respective, qui est supérieur à 0,1, notamment inférieur à 0,2 ; et/ou
- pour lequel le premier, le deuxième, le troisième et le quatrième tube sont réalisés et disposés de telle sorte que chacun des premiers segments partiels (111-1 ; 121-1 ; 112-1 ; 122-1) est respectivement aligné avec l'axe de liaison imaginaire correspondant, à savoir reliant de manière imaginaire la première et la deuxième extrémité respective du tube respectif, notamment de telle sorte que l'axe longitudinal imaginaire de chacun des premiers segments partiels (111-1 ; 121-1 ; 112-1 ; 122-1) coïncide respectivement avec l'axe de liaison imaginaire correspondant ; et/ou
- pour lequel le premier, le deuxième, le troisième et le quatrième tube sont réalisés et disposés de telle sorte que chacun des septièmes segments partiels (111-7 ; 121-7 ; 112-7 ; 122-7) est respectivement aligné avec l'axe de liaison imaginaire correspondant, à savoir reliant de manière imaginaire la première et la deuxième extrémité respective du tube respectif, notamment de telle sorte que l'axe longitudinal imaginaire de chacun des septièmes segments partiels (111-7 ; 121-7 ; 112-7 ; 122-7) coïncide respectivement avec l'axe de liaison imaginaire correspondant ; et/ou
- chacun parmi le premier, le deuxième, le troisième et le quatrième tube étant respectivement conçu pour guider le fluide dans son canal intérieur respectif, notamment pour être traversé par le fluide à partir de sa première extrémité respective en direction de sa deuxième extrémité respective, et pour être laissé vibrer pendant ce temps.

14. Transducteur selon l'une des revendications précédentes,
- pour lequel le dispositif d'excitation présente un premier excitateur de vibrations, notamment électrodynamique, ainsi qu'au moins un deuxième excitateur de vibrations, notamment électrodynamique et/ou de construction identique au premier excitateur de vibrations ;
- et pour lequel l'arrangement de capteurs comprend un premier capteur de vibrations - notamment électrodynamique -, un deuxième capteur de vibrations - notamment électrodynamique et/ou identique au premier capteur de vibrations -, un troisième capteur de vibrations - notamment électrodynamique et/ou identique au premier capteur de vibrations - ainsi qu'au moins un quatrième capteur de vibrations - notamment électrodynamique et/ou identique au troisième capteur de vibrations.

15. Transducteur selon la revendication précédente,
- pour lequel le premier excitateur de vibrations est monté sur le quatrième segment partiel du premier tube, à distance à la fois du troisième segment partiel du premier tube et du cinquième segment partiel du premier tube, et sur le quatrième segment partiel du deuxième tube, à distance à la fois du troisième segment partiel du deuxième tube et du cinquième segment partiel du deuxième tube ;
- et pour lequel le deuxième excitateur de vibrations est monté sur le quatrième segment partiel du troisième tube, à distance à la fois du troisième segment partiel du troisième tube et du cinquième segment partiel du troisième tube, et sur le quatrième segment partiel du quatrième tube, à distance à la fois du troisième segment partiel du quatrième tube et du cinquième segment partiel du quatrième tube ;
- le premier excitateur de vibrations étant monté sur le troisième segment partiel du premier tube, à distance à la fois du deuxième segment partiel du premier tube et du quatrième segment partiel du premier tube, et sur le troisième segment partiel du deuxième tube, à distance à la fois du deuxième segment partiel du deuxième tube et du quatrième segment partiel du deuxième tube ;
- le deuxième excitateur de vibrations étant monté sur le cinquième segment partiel du premier tube, à distance à la fois du sixième segment partiel du premier tube et du quatrième segment partiel du premier tube, et sur le cinquième segment partiel du deuxième tube, à distance à la fois du sixième segment partiel du deuxième tube et du quatrième segment partiel du deuxième tube ;
- le troisième excitateur de vibrations étant monté sur le troisième segment partiel du troisième tube, à distance à la fois du deuxième segment partiel du troisième tube et du quatrième segment partiel du troisième tube, et sur le troisième segment partiel du quatrième tube, à distance à la fois du deuxième segment partiel du quatrième tube et du quatrième segment partiel du quatrième tube ;
- et le quatrième excitateur de vibrations étant monté sur le cinquième segment partiel du troisième tube, à distance à la fois du sixième segment partiel du troisième tube et du quatrième segment partiel du troisième tube, et sur le cinquième segment partiel du quatrième tube, à distance à la fois du sixième segment partiel du quatrième tube et du quatrième segment partiel du quatrième tube.

16. Transducteur selon l'une des revendications précédentes,
- pour lequel le premier diviseur de débit présente une première bride de raccordement servant notamment au raccordement de l'arrangement de tubes à un segment d'une conduite de process amenant le fluide (FL1) ;
- et pour lequel le deuxième diviseur de débit présente une deuxième bride de raccordement servant notamment au raccordement de l'arrangement de tubes à un segment d'une conduite de process évacuant à nouveau le fluide (FL1).

17. Transducteur selon la revendication précédente, pour lequel chacune parmi la première et la deuxième bride de raccordement présente respectivement une surface d'étanchéité pour le raccordement étanche au fluide ou sans fuite de l'arrangement de tubes à un segment de conduite correspondant respectif d'une conduite de process.

18. Transducteur selon la revendication précédente,
- pour lequel chaque surface d'étanchéité de chacune parmi la première et la deuxième bride de raccordement présente un diamètre minimal, notamment supérieur à 100 mm et/ou définissant un diamètre nominal du transducteur ; et/ou
- pour lequel une distance minimale entre les surfaces d'étanchéité de la première et de la deuxième bride de raccordement définit une longueur de montage de l'arrangement de tubes ou du transducteur formé avec celui-ci, laquelle longueur est notamment supérieure à 1 000 mm et/ou inférieure à 3 000 mm.

19. Transducteur selon l'une des revendications précédentes, lequel transducteur comprend en outre : un boîtier de transducteur (200) enveloppant le premier, le deuxième, le troisième et le quatrième tube, lequel boîtier de transducteur présente notamment une résistance à la pression de plus de 50 bar et lequel boîtier de transducteur présente au moins une cavité (200*), notamment fermée hermétiquement, et chacun parmi le premier, le deuxième, le troisième et le quatrième tube étant disposé à l'intérieur de la même cavité.

20. Transducteur selon la revendication précédente, pour lequel le boîtier de transducteur présente un élément support (200-1) s'étendant d'une première extrémité à une deuxième extrémité avec une longueur d'élément support, ainsi qu'un élément d'enveloppe (200-2) ;
- l'élément support (200-1) étant relié mécaniquement, notamment par liaison de matière, par sa première extrémité au premier diviseur de débit et par sa deuxième extrémité au deuxième diviseur de débit ;
- l'élément d'enveloppe (200-2) étant relié mécaniquement, notamment par liaison de matière, à l'élément support (200-1) du boîtier de transducteur ;
- et l'élément support (200-1) présentant au moins un espace creux (200*-1) enveloppé par une paroi, notamment métallique, lequel espace creux forme une zone partielle de la cavité (200*) du boîtier de transducteur (200).

21. Transducteur selon la revendication précédente,
- pour lequel l'élément support (200-1) est pour l'essentiel cylindrique, notamment au moins partiellement cylindrique creux, ou tubulaire ; et/ou
- pour lequel l'élément d'enveloppe (200-2) est tubulaire, de telle sorte que l'élément d'enveloppe (200-2) présente un espace creux (200*-2) enveloppé par une paroi et formant une zone partielle de la cavité (200*), lequel espace creux est notamment partiellement cylindrique circulaire.

22. Système de mesure vibronique destiné à la mesure et/ou à la surveillance d'au moins un paramètre d'écoulement, notamment variable dans le temps, notamment un débit massique, un débit volumique et/ou une vitesse d'écoulement, et/ou à la mesure et/ou à la surveillance d'au moins un paramètre de matière, notamment variable dans le temps, notamment une densité et/ou une viscosité, d'un fluide en écoulement, notamment un gaz, un liquide ou une dispersion, lequel système de mesure comprend :
- un transducteur (MW) selon l'une des revendications précédentes ;
- ainsi qu'une électronique de mesure et d'exploitation (ME) couplée électriquement aussi bien à son dispositif d'excitation (30) qu'à son arrangement de capteurs (40), au moyen de lignes de liaison électriques, laquelle électronique est notamment constituée d'au moins un microprocesseur et/ou d'au moins un processeur de signaux numériques ;
- l'électronique de mesure et d'exploitation étant conçue pour générer des signaux d'excitation (e31, e32) alimentant et/ou commandant le transducteur de mesure ; et/ou
- l'électronique de mesure et d'exploitation étant conçue pour recevoir et traiter des signaux de vibration (s41, s42, s43, s44) générés au moyen du transducteur de mesure (MW), notamment pour déterminer une valeur mesurée de débit massique représentant un débit massique, m, du fluide, et/ou une valeur de paramètre de matière représentant l'au moins un paramètre de matière, notamment une valeur mesurée de densité représentant une densité du fluide et/ou une valeur mesurée de viscosité représentant une viscosité du fluide.

23. Utilisation d'un transducteur selon l'une des revendications 1 à 21 ou d'un système de mesure selon la revendication 22, destiné à mesurer et/ou à surveiller un fluide s'écoulant dans une conduite, laquelle conduite présente notamment un diamètre nominal supérieur à 100 mm, lequel fluide est notamment un liquide s'écoulant à un débit massique supérieur à 800 t/h.
